# EUROPÄISCHE PATENTANMELDUNG

(11) **EP 3 940 467 A1**
(43) Veröffentlichungstag der Anmeldung: **19.01.2022**
(21) Anmeldenummer: 20185513.7
(22) Anmeldetag: 13.07.2020
(51) Int. Cl.: G05B 19/05, G05B 9/03, G05B 23/02, G06F 11/16

(54) **STEUERUNGSSYSTEM ZUR STEUERUNG EINER VORRICHTUNG ODER ANLAGE**

(71) Anmelder: Siemens Aktiengesellschaft, 80333 München (DE)
(72) Erfinder: Quendt, Bernhard, 90537 Feucht (DE); Schiller, Frank Dittrich, 90409 Nürnberg (DE)

(57) **Zusammenfassung**

Die Erfindung betrifft ein Steuerungssystem (100) zur Steuerung einer Vorrichtung oder Anlage (400, 420, 430), wobei bezüglich der Steuerung der Vorrichtung oder Anlage (400, 420, 430) mindestens eine erste Sicherheitsfunktion vorgesehen ist, und wobei das Steuerungssystem (100) eine erste sicherheitsgerichtete Steuerungseinrichtung (200) umfasst, welche zur Ausführung der mindestens einen ersten Sicherheitsfunktion ausgebildet und eingerichtet ist, wobei weiterhin, die erste sicherheitsgerichtete Steuerungseinrichtung (200) als eine erste sicherheitsgerichtete Steuerungsapplikation (200) ausgebildet und eingerichtet ist, die in einer Cloud (500) implementiert ist, und die erste sicherheitsgerichtete Steuerungsapplikation (200) und die Vorrichtung oder Anlage (400, 420, 430) über eine erste sicherheitsgerichtete Kommunikationsverbindung (210, 220, 230) kommunikativ gekoppelt sind.

## Beschreibung

Die vorliegende Erfindung betrifft ein Steuerungssystem zur Steuerung einer Vorrichtung oder Anlage, wobei bezüglich der Steuerung der Vorrichtung oder Anlage mindestens eine erste Sicherheitsfunktion vorgesehen ist, und wobei das Steuerungssystem eine erste sicherheitsgerichtete Steuerungseinrichtung umfasst, welche zur Ausführung der mindestens einen ersten Sicherheitsfunktion ausgebildet und eingerichtet ist.

Derartige Verfahren sind aus dem Stand der Technik bekannt. So offenbart z.B. die Offenlegungsschrift DE 10 2018 118 243 A1 ein Sicherheitssystem mit einer Steuerung, welche über eine Cloud, z.B. einen Server oder eine Datenbank, mit einer oder mehreren räumlich verteilten Maschinen verbunden ist. Dabei kann die Steuerung eine Sicherheitssteuerung sein, welche einem Sicherheitsstandard genügt. Die Steuerung übermittelt, beispielsweise über eine gesicherte Datenverbindung, eine durch die Maschine auszuführenden Befehl, insbesondere ein sicherheitsrelevanter Befehl. Dieser Befehl kann in der Cloud gespeichert werden und wird dort der Maschine zum Abruf bereitgestellt. Die Maschine kann den Befehl dann von der Cloud abrufen und ausführen.

Es ist ein Nachteil des Standes der Technik, dass die dabei verwendete Sicherheitstechnik relativ unflexibel ist.

Daher ist es eine Aufgabe der vorliegenden Erfindung, sicherheitsgerichtete Steuerungssysteme flexibler zu gestalten.

Diese Aufgabe wird gelöst durch eine Steuerungseinrichtung mit den Merkmalen des Patentanspruch 1.

Ein solches Steuerungssystem ist zur Steuerung einer Vorrichtung oder Anlage ausgebildet und eingerichtet, wobei bezüglich der Steuerung der Vorrichtung oder Anlage mindestens eine erste Sicherheitsfunktion vorgesehen ist. Dabei umfasst das Steuerungssystem eine erste sicherheitsgerichtete Steuerungseinrichtung, welche zur Ausführung der mindestens einen ersten Sicherheitsfunktion ausgebildet und eingerichtet ist.

Die erste sicherheitsgerichtete Steuerungseinrichtung ist dabei als eine erste sicherheitsgerichtete Steuerungsapplikation ausgebildet und eingerichtet ist, die in einer Cloud implementiert ist, wobei die erste sicherheitsgerichtete Steuerungsapplikation und die Vorrichtung oder Anlage über eine erste sicherheitsgerichtete Kommunikationsverbindung kommunikativ gekoppelt sind.

Ein solches Steuerungssystem ermöglicht beispielsweise eine Benutzung der Cloud als zeitweisen oder permanenten Ersatz für eine separate Safety-Steuerung. Die Sicherheitsfunktionen werden dabei vollständig in der Cloud bearbeitet. Eine sichere Kommunikation zwischen der ersten sicherheitsgerichteten Steuerungsapplikation und der Vorrichtung oder Anlage, wie z.B. mit PROFIsafe, ist vorteilhaft oder sogar notwendig, um Nachrichtenfehler auf dem Weg zur Cloud und von der Cloud aufzudecken.

Auf diese Weise kann z.B. ein sicherheitsgerichtetes Steuerungssystem flexibler an jeweilige Situationen angepasst werden.

Dabei ist die Anbindung an die Cloud ist zwar möglicherweise nicht sehr zuverlässig, was die Sicherheit der Steuerung aber nicht beeinträchtigt. Denn jedes Sicherheitssystem ist so gestaltet, dass Fehler immer zu einem sicheren Zustand führen, z.B. durch eine entsprechende Reaktion durch sichere Aktoren. Daher wird jedoch die Verfügbarkeit von entsprechenden Betriebsfunktionen reduziert.

Die Verlagerung der sicherheitsgerichteten Steuerungseinrichtung als eine sicherheitsgerichtete Steuerungsapplikation in die Cloud ist z.B. besonders im Rahmen einer Verwendung als zeitweisen Ersatz für eine in der Anlage befindlichen Safety-Steuerung vorteilhaft.

Auch auf diese Weise ermöglicht die Erfindung ein flexibleres sicherheitsgerichtetes Steuerungssystem.

Die Vorrichtung oder Anlage kann beispielsweise als eine Maschine, ein Gerät, ein Roboter, eine Produktionsanlage oder vergleichbares ausgebildet und eingerichtet sein oder auch derartige Teile als Komponenten umfassen. Solch eine Vorrichtung oder Anlage kann z.B. ein oder mehrere solche oder vergleichbare Komponenten, Antriebe, Sensoren, Maschinen, Geräte, Kommunikationseinrichtungen oder Ähnliches umfassen.

Weiterhin kann die Vorrichtung oder Anlage beispielsweise als eine Vorrichtung oder Anlage zum Schutz von Personen oder der Umgebung bzw. Umwelt ausgestaltet und eingerichtet sein bzw. eine derartige Vorrichtung oder Anlage umfassen. Solche Vorrichtungen können beispielsweise Schutzeinrichtungen oder Warn-Einrichtungen, wie beispielsweise Lichtschranken, Lichtgitter, Bewegungssensoren oder ähnliches sein oder umfassen. Weiterhin können Vorrichtungen oder Anlagen auch Kameras, Schutzgitter mit entsprechenden Schließ- und Öffnungs-Einrichtungen bzw. -Mechanismen, Rauch- oder Brandmelder, Sprinkleranlagen, Not-aus-Einrichtungen, oder vergleichbare Vorrichtungen oder Anlagen sein bzw. derartige Vorrichtungen oder Anlagen umfassen.

Die Steuerungseinrichtung kann z.B. eine sogenannte speicherprogrammierbare Steuerung (SPS) sein, zum Beispiel eine so genannte modulare speicherprogrammierbare Steuerung. Die Steuerungseinrichtung kann beispielsweise auch als jede Art von Computer oder Computersystem ausgebildet und eingerichtet sein, welches zur Steuerung einer Vorrichtung oder Anlage ausgebildet und eingerichtet ist und dafür z.B. ein Echtzeitbetriebssystem umfassen kann. Eine Steuerungseinrichtung kann beispielsweise auch als ein Computer, ein Computersystem oder Datennetzwerk bzw. eine Cloud ausgebildet und eingerichtet sein, auf der eine Steuerungssoftware oder eine Steuerungssoftware-Anwendung, z.B. eine sogenannte Steuerungsapplikation, implementiert bzw. instanziiert ist.

Ganz allgemein können in Bezug auf die Sicherheit im Maschinen-, Anlagen- und/oder Produktionsumfeld drei Aspekte der Systemsicherheit betrachtet werden.

Der erste ist eine "primäre Sicherheit", die Risiken wie Stromschlag und Verbrennungen betrifft, die direkt von der Hardware verursacht werden.

Eine zweite ist eine "funktionale Sicherheit", die die Sicherheit von Geräten (das sogenannte "EUC" - siehe unten) umfasst, die von getroffenen Maßnahmen zur Risikominderung abhängt und somit mit dem ordnungsgemäßen Funktionieren dieser Maßnahmen zusammenhängt.

Eine dritte ist eine indirekte Sicherheit, die die indirekten Folgen einer nicht ordnungsgemäßen Funktionsweise eines Systems betrifft, wie z.B. die Erzeugung falscher Informationen durch ein Informationssystem wie eine medizinische Datenbank.

Der Standard "IEC 61508" betrifft im Wesentlichen den zweiten dieser Aspekte, nämlich die funktionale Sicherheit. Die dort verwendeten Grundsätze sind aber durchaus allgemein anwendbar.

Im Bereich der Sicherheit im Umgang mit bzw. der Steuerung von Maschinen und Anlagen gibt es weiterhin drei branchenspezifische Normen, die zusätzlich zur IEC 61508 erwähnenswert sind. Die deutsche Norm DIN 19250 mit dem Titel "Grundlegende Sicherheitsbetrachtungen für MSR-Schutzeinrichtungen" wurde bereits vor den ersten Entwürfen der internationalen Norm entwickelt, und ihr Inhalt wurde darin verwendet. Die US-Norm S84 wurde zeitgleich mit dem Vorläufer der IEC 61508 entwickelt, und sie wurde ihren Prinzipien entsprechend gestaltet. Weiterhin wurde die internationale Norm IEC 61511 nach der IEC 61508 entwickelt, um eine echte branchenspezifische Interpretation für die Prozessindustrie zu ermöglichen.

Die im Rahmen der vorliegenden Beschreibung vorgestellten Sicherheitsarchitekturen und -konzepte können auf den Normen IEC 61508, IEC 61131-6, IS013849, IEC 62061, IEC 61511 etc. basieren und/oder derart ausgebildet und eingerichtet sein, dass sie die Vorgaben von mindestens einer dieser Normen erfüllen. Diese Normen definieren sogenannte Sicherheitsfunktionen, die von einem Sicherheitssystem (z.B. eine entsprechende Steuerungseinrichtung gemäß der vorliegenden Beschreibung bzw. Komponenten oder Module für eine solche Steuerungseinrichtung) gebildet werden.

Die Norm 61131-2 dagegen enthält Anforderungen an die Industrietauglichkeit (EMV, Umwelteinflüsse etc.). Dieser Standard betrifft daher besonders die Steuereinrichtungen innerhalb eines sicherheitsgerichteten Systems.

Die der Rahmen der vorliegenden Beschreibung verwendete Begriff "Sicherheitsanforderungsstufe" entstammt dem Gebiet der funktionalen Sicherheit und wird in der internationalen Normung gemäß IEC 61508/IEC61511 auch als Sicherheitsstufe oder Sicherheits-Integritätslevel (safety integrity level, kurz SIL) bezeichnet. Sie dient der Beurteilung elektrischer/elektronischer/programmierbar elektronischer Systeme in Bezug auf die Zuverlässigkeit von Sicherheitsfunktionen. Aus dem angestrebten Level ergeben sich dann sicherheitsgerichteten Konstruktionsprinzipien, die eingehalten werden müssen, damit das Risiko einer Fehlfunktion minimiert werden kann.

Nachfolgend einige Definitionen, die in Anlehnung an Teil 4 der IEC 61508 formuliert sind und im Rahmen der vorliegenden Beschreibung verwendet werden. Die zur Definition ausgewählten Begriffe sind diejenigen, die für die im Zusammenhang mit der vorliegenden Beschreibung als am wichtigsten erachtet werden.
- Kontrollierte Geräte (EUC: Equipment under Control): Ausrüstung, Maschinen, Apparate oder Anlagen, die für Herstellungs-, Prozess-, Transport-, medizinische oder andere Tätigkeiten verwendet werden.
- EUC-Steuerungssystem: System, das auf Eingangssignale aus dem Prozess und/oder von einem Bediener reagiert und Ausgangssignale erzeugt, die bewirken, dass die EUC in der gewünschten Weise arbeitet. Solche EUC-Steuerungssysteme können beispielsweise eine oder mehrere sicherheitsgerichtete Steuerungseinrichtungen oder Sicherheitsapplikationen, z.B. gemäß der vorliegenden Beschreibung, umfassen.
- Programmierbares elektronisches System (PES) bzw. Elektrisches/elektronisches/programmierbares elektronisches System (E/E/PE-System): jeweils ein System zum Steuern, Schützen oder Überwachen basierend auf einer oder mehreren programmierbaren elektronischen Vorrichtungen, einschließlich aller Elemente des Systems wie Stromversorgungen, Sensoren und andere Eingabevorrichtungen, Kommunikationsverbindungen und andere Kommunikationswege sowie Stellglieder und andere Ausgabevorrichtungen. Ein Beispiel für ein solches E/E/PE-System kann z.B. eine sicherheitsgerichtete Steuerungseinrichtungen oder Sicherheitsapplikationen, z.B. gemäß der vorliegenden Beschreibung sein.
   - Sicherheit: Freiheit von inakzeptablem Risiko.
   - Sicherer Zustand: Zustand einer Maschine oder Anlage, in welchem kein inakzeptables Risiko durch die Vorrichtung oder Anlage vorliegt.
   - Sicherheitsbezogenes System oder sicherheitsgerichtetes System: ein System, das
   - die erforderlichen Sicherheitsfunktionen implementiert, die erforderlich sind, um einen sicheren Zustand für die EUC zu erreichen oder aufrechtzuerhalten; und
   - dazu bestimmt ist, allein oder mit anderen sicherheitsrelevanten E/E/PE-Systemen, anderen sicherheitsrelevanten Technologien und/oder externen Einrichtungen zur Risikominderung die erforderliche Sicherheitsintegrität für die erforderlichen Sicherheitsfunktionen zu erreichen.
- Funktionale Sicherheit: Teil der Gesamtsicherheit im Zusammenhang mit der EUC und dem EUC-Leitsystem, der von der ordnungsgemäßen Funktion der sicherheitsrelevanten Systeme E/E/PE, anderer sicherheitsrelevanter Systeme der Technologie und externer Einrichtungen zur Risikominderung abhängt.
- Sicherheitsfunktion: Funktion, die von einem sicherheitsbezogenen E/E/PE-System, einem anderen sicherheitsbezogenen Technologiesystem oder externen Risikominderungseinrichtungen zu erfüllen ist, die einen sicheren Zustand für die EUC in Bezug auf ein bestimmtes gefährliches Ereignis erreichen oder aufrechterhalten sollen.
- Sicherheitsintegrität: Wahrscheinlichkeit, dass ein sicherheitsbezogenes System die erforderlichen Sicherheitsfunktionen unter allen angegebenen Bedingungen innerhalb eines bestimmten Zeitraums zufriedenstellend ausführt.
- Software-Sicherheitsintegrität: Teil der Sicherheitsintegrität von Sicherheits-bezogenen Systemen und betrifft Maßnahmen, die dafür sorgen, dass die Software eines programmierbaren elektronischen Systems die entsprechenden Sicherheitsfunktionen unter allen festgelegten Bedingungen innerhalb einer festgelegten Zeit erreicht.
- Hardware Sicherheitsintegrität: Teil der Sicherheitsintegrität von Sicherheits-bezogenen Systemen, welche sich auf zufällige Hardware-Fehler in einem gefährlichen Zustand beziehen.
- Sicherheitsintegritätslevel (SIL): diskreter Level (einer von vier möglichen Leveln) zur Festlegung der Sicherheitsintegritätsanforderungen der Sicherheitsfunktionen, die den sicherheitsbezogenen E/E/PE-Systemen zuzuordnen sind, wobei SIL 4 das höchste Maß an Sicherheitsintegrität und SIL 1 das niedrigste Maß an Sicherheitsintegrität darstellt.
- Spezifikation der Sicherheits-Erfordernisse: Spezifikation, die alle Erfordernisse bezüglich Sicherheitsfunktionen enthält, die ein sicherheitsgerichtetes System ausführen bzw. erfüllen muss.
- Spezifikation der Anforderungen an Sicherheitsfunktionen: Spezifikation, die die Anforderungen an die Sicherheitsfunktionen enthält, die von den sicherheitsbezogenen Systemen ausgeführt werden müssen. [Ein Teil der Sicherheitsanforderungs-Spezifikationen] .
- Spezifikation der Sicherheitsintegritätsanforderungen: Spezifikation, die die Anforderungen an die Sicherheitsintegrität der Sicherheitsfunktionen enthält, die von den sicherheitsbezogenen Systemen ausgeführt werden müssen. Dies ist in die Spezifikation der Sicherheitsanforderungen integriert.

Wie vorstehend bereits erläutert, sind Sicherheitsfunktionen, unter anderem auch im Zusammenhang mit der vorliegenden Beschreibung, solche Funktionen, die von einem sicherheitsbezogenen E/E/PE-System, einem anderen sicherheitsbezogenen Technologiesystem oder externen Risikominderungseinrichtungen zu erfüllen sind, und die einen sicheren Zustand für die EUC in Bezug auf ein bestimmtes gefährliches Ereignis erreichen oder aufrechterhalten sollen.

Im Gegensatz dazu wird in der Sicherheitstechnik, und auch in der vorliegenden Beschreibung, mit einer Betriebsfunktion eine Funktion bezeichnet, welche im Zusammenhang mit der Steuerung der Vorrichtung oder Anlage verwendet wird und an welche nicht die Kriterien für eine Sicherheitsfunktion angelegt werden und die diese Kriterien nicht erfüllen müssen. In diesem Zusammenhang kann eine Betriebsfunktion auch als eine nicht-sicherheitsgerichtete Funktion ausgebildet und eingerichtet sein.

Im Zusammenhang mit funktionaler Sicherheit, und auch im Zusammenhang mit der vorliegenden Beschreibung, werden also die Funktionen, welche sicherheitsgerichteten Kriterien (z.B. wie im Zusammenhang mit der vorliegenden Beschreibung und den dort zitierten Standards definiert) genügen müssen, als Sicherheitsfunktionen bezeichnet, während die Funktionen zur Steuerung der Vorrichtung oder Anlage, die diesen Kriterien nicht gehorchen müssen, als Betriebsfunktionen bezeichnet werden.

Eine sicherheitsgerichtete Steuerungseinrichtung kann derart ausgebildet und eingerichtet sein, das garantiert werden kann, dass beim Betrieb der sicherheitsgerichteten Steuerungseinrichtung kein gefährlicher Zustand entstehen kann - beispielsweise durch einen Ausfall einer Komponente. Eine sicherheitsgerichtete Steuerungseinrichtung kann weiterhin derart ausgebildet und eingerichtet sein, dass im Rahmen des Betriebs der sicherheitsgerichteten Steuerungseinrichtung kein inakzeptables Risiko durch die Vorrichtung oder Anlage entstehen kann.

Im Zusammenhang mit einer sicherheitsgerichteten Steuerungseinrichtung können beispielsweise die nachfolgenden Mechanismen im Rahmen einer Software- und/oder Hardware-Sicherheitsintegrität implementiert sein:
- zur Erkennung von zufälligen Fehlern werden in der sicherheitsgerichteten Steuerungseinrichtung andauernd Selbsttests durchgeführt, bei welchen beispielsweise die Verfügbarkeit einer zentralen Baugruppe, von Eingabe-Ausgabe-Karten, von Schnittstellen sowie von Peripherie überprüft wird;
- es kann eine redundante Auslegung der Hardware vorliegen, um Fehler in der Hardware bzw. beim Ablauf des Steuerungsprogramms erkennen zu können;
- es kann beim Ablauf eines Steuerungsprogramms ein sogenanntes "Coded Processing" vorgesehen sein, um Fehler im Ablauf des Steuerungsprogramms erkennen zu können;
- es können zusätzliche Test- und Überwachungsfunktionen ausgeführt werden: Überwachung der Netzspannung, Test der Zentraleinheiten hinsichtlich der Beschreibbarkeit von Flags, Adressiertests und ähnlichem, Test der Eingangskanäle, teste Ausgangskanäle, Tests der Datenübertragung über einen internen Bus.

Eine sicherheitsgerichtete Steuerungseinrichtung kann beispielsweise derart ausgebildet und eingerichtet sein, dass sie über ein sicherheitsrelevantes Betriebssystem verfügt. Dieses kann beispielsweise einem Sicherheitsstandard genügen, z.B. dem Standard IEC 61131-2. Durch die Konformität zu einem Sicherheitsstandard kann die sicherheitsgerichtete Steuerungen beispielsweise gegenüber Störungen, Verpolungen und/oder Überspannungen geschützt sein.

Die sicherheitsgerichtete Steuerung kann beispielsweise zwei Untereinheiten aufweisen, die beide miteinander derart miteinander synchronisiert werden, dass vor Ausgabe eines Ausgabewerts an verschiedenen Stellen des Programmablaufs Ausgangswerte miteinander verglichen werden können. Unterscheidet sich nun ein Ausgang der einen Untereinheit von dem der anderen Untereinheit, wird eine Ausgabe des Wertes unterbunden. In Reaktion auf einen solchen Fehler ist es möglich, den Programmablauf neu zu starten, mittels einer Diagnoseeinrichtung den Fehler zu ermitteln und/oder entweder die Bearbeitung zu unterbrechen oder den Fehler zu beheben.

Insbesondere kann eine sicherheitsgerichtete Steuerungseinrichtung konform mit mindestens einem der Standards IEC 61508, DIN 19520 oder IEC 61511 ausgebildet und eingerichtet sein.

Die sicherheitsgerichtete Steuerungseinrichtung kann beispielsweise als eine sogenannte speicherprogrammierbare Steuerung (SPS) ausgebildet und eingerichtet sein. Weiterhin kann die sicherheitsgerichtete Steuerungseinrichtung auch als eine sogenannte modulare speicherprogrammierbare Steuerung (modulare SPS) eingerichtet und ausgestaltet sein.

Die sicherheitsgerichtete Steuerungseinrichtung kann weiterhin auch als ein sogenanntes EDGE-Device ausgebildet und eingerichtet sein, wobei ein solches EDGE-Device beispielsweise eine Applikation zur Steuerung von Vorrichtungen oder Anlagen umfassen kann. Beispielsweise kann eine solche Applikation als eine Applikation mit der Funktionalität einer speicherprogrammierbaren Steuerung ausgebildet und eingerichtet sein. Das EDGE Device kann dabei beispielsweise mit einer Steuereinrichtung der sicherheitsgerichteten Anlage verbunden sein oder auch unmittelbar mit einer zu steuernden Vorrichtung oder Anlage. Weiterhin kann das EDGE Device derart ausgebildet und eingerichtet sein, dass es zusätzlich noch mit einem Datennetzwerk oder einer Cloud verbunden ist bzw. zur Verbindung mit einem entsprechenden Datennetzwerk oder einer entsprechenden Cloud ausgebildet und eingerichtet ist.

Eine sicherheitsgerichtete Steuerungsapplikation kann beispielsweise als eine Realisierung einer sicherheitsgerichteten Steuerungseinrichtung in Programmcode bzw. als Software ausgebildet und eingerichtet sein. In einem solchen Fall kann eine solche Software bzw. ein solcher Programmcode derart ausgebildet und eingerichtet sein, dass er bei einem Ablauf auf einem Rechner die Funktionalität einer sicherheitsgerichteten Steuerungseinrichtung erzeugt. Beispielsweise kann eine sicherheitsgerichtete Steuerungsapplikation weiterhin auch als eine Simulation bzw. eine Simulationssoftware für eine sicherheitsgerichtete Steuerungseinrichtung ausgebildet und eingerichtet sein.

Dass die erste sicherheitsgerichtete Steuerungsapplikation in der Cloud implementiert ist, kann beispielsweise derart ausgebildet und eingerichtet sein, dass die erste sicherheitsgerichtete Steuerungsapplikation als eine Softwareapplikation, z.B. gemäß der vorliegenden Beschreibung, ausgebildet und eingerichtet ist, und diese Softwareapplikation, beziehungsweise eine Instanz dieser Softwareapplikation, in der Cloud installiert bzw. implementiert ist.

Ein sicherheitsgerichtetes Steuerprogramm kann derart ausgebildet und eingerichtet sein, das garantiert werden kann, dass beim Ablauf des sicherheitsgerichteten Steuerprogramms im Rahmen der Steuerung der Vorrichtung oder Anlage kein gefährlicher Zustand entstehen kann, beispielsweise durch einen Ausfall einer Komponente. Ein sicherheitsgerichtetes Steuerprogramm kann derart ausgebildet und eingerichtet sein, dass beim Ablauf des sicherheitsgerichteten Steuerprogramms im Rahmen der Steuerung der Vorrichtung oder Anlage kein inakzeptables Risiko durch die Vorrichtung oder Anlage entstehen kann.

Insbesondere kann ein sicherheitsgerichtetes Steuerprogramm konform mit mindestens einem der Standards IEC 61508, DIN 19520 oder IEC 61511 ausgebildet und eingerichtet sein.

Eine Cloud kann jedes Datennetzwerk und/oder jede Infrastruktur sein, die den Zugriff auf und die Nutzung von gemeinsam genutzten Computerdiensten durch Cloud-fähige Client-Geräte ermöglicht. Eine Cloud kann eine öffentliche Cloud sein, die über das Internet durch Geräte mit Internet-Konnektivität und entsprechenden Berechtigungen zur Nutzung der Dienste zugänglich ist.

Dabei kann die Cloud weiterhin auch als eine sogenannte Cloud-Plattform ausgebildet und eingerichtet sein. Dabei umfasst kann eine Cloud-Plattform z.B. zusätzlich zur der Datennetzwerk-Struktur der Cloud noch Software-Tools umfassen, mit welchen beispielsweise Cloud- und/oder Nutzer-Software oder Cloud- und/oder Nutzer-Dienste in der Cloud implementiert bzw. gemanaged werden können. In einigen Szenarien kann eine Cloud als eine sogenannte Cloud-Plattform von einem Cloud-Anbieter als Plattform-as-a-Service (PaaS) bereitgestellt werden, und die Dienste beispielsweise eines Herstellers von Automatisierungslösungen oder auch Sicherheits-Automatisierungslösungen können auf der Cloud-Plattform als Cloud-basierter Dienst gespeichert und ausgeführt werden.

In einigen dieser Konfigurationen können der Zugang zur Cloud oder Cloud-Plattform und beispielsweise zu entsprechenden Diensten den Kunden als Abonnementdienst von einem Eigentümer der Dienste zur Verfügung gestellt werden. Alternativ kann die Cloud oder Cloud-Plattform eine private Cloud sein, die intern beispielsweise von einem Industrieunternehmen betrieben wird. Eine beispielhafte private Cloud oder Cloud-Plattform kann aus einer Reihe von Servern bestehen bzw. solche umfassen, die entsprechende Dienste beherbergen und sich in einem Unternehmensnetzwerk befinden, das durch eine Firewall geschützt ist.

Der erste sichere Zustand, und ganz generell jeder sichere Zustand, kann beispielsweise durch definierte Vorrichtungs- oder Anlagen-Parameter festgelegter Zustand sein. Weiterhin können der erste sichere Zustand bzw. ein sicherer Zustand ganz allgemein, beispielsweise auch als ein sicherer Zustand gemäß des Standards IEC 61508 ausgebildet und eingerichtet sein.

Solche definierten Vorrichtungs- oder Anlagen-Parameter können z.B. bestimmte Einzelwerte für solche Vorrichtungs- oder Anlagenparameter oder entsprechende Kombinationen davon umfassen. Weiterhin können die definierte Vorrichtungs- oder Anlagen-Parameter auch Wertebereiche für bestimmte Maschinen- oder Anlagenparameter umfassen.

Es können für eine Vorrichtung oder Anlage auch mehrere sichere Zustände definiert bzw. vorgegeben sein, wobei jeder der sicheren Zustände gemäß der vorliegenden Beschreibung ausgebildet und eingerichtet sein kann.

Sicheren Zustände können beispielsweise durch das Abschalten, Anhalten und/oder Stromlos-Machen einer Vorrichtung oder Anlage gegeben sein. Weiterhin können sichere Zustände beispielsweise durch eine bestimmte Position oder Lage der Maschine oder Anlage bzw. von jeweils Teilen davon gegeben sein. Sichere Zustände können beispielsweise auch durch einen Stillstand oder eine bestimmte Geschwindigkeit der Vorrichtung oder Anlage bzw. von Teilen davon gegeben sein.

Wertebereiche für Vorrichtungs- oder Anlagenparameter können beispielsweise Parameterbereiche sein, die zu einem bestimmten Positions- oder Lage-Bereich für die Vorrichtung oder Anlage, bzw. jeweils Teilen davon, führen. Entsprechend können Wertebereiche für Vorrichtungs- oder Anlagenparameter beispielsweise Parameterbereiche sein, die zu einem bestimmten Geschwindigkeitsbereich für die Vorrichtung oder Anlage, bzw. jeweils Teilen davon, führen.

Ein sicherer Zustand, bzw. der erste sichere Zustand, kann auch durch eine Abfolge von Parameterwerten gegeben sein. So kann die Abfolge von Parameterwerten beispielsweise derart ausgebildet und eingerichtet sein, dass die Vorrichtung oder Anlage oder jeweilige Teile oder Komponenten davon nacheinander entsprechend der Abfolge von Parameterwerten den jeweiligen Parameterwerten entsprechende Betriebszustände einnimmt. Auf diese Weise kann der sichere Zustand z.B. auch als eine Abfolge von Zuständen definiert sein, die letztendlich zu einem sicheren Erreichen eines sicheren Endzustands führen.

Unter dem Auslösen einer sicheren Reaktion kann beispielsweise das Auslösen einer Sicherheitsfunktion eines sicherheitsgerichteten Systems im Sinne des Standards IEC 61508 verstanden werden.

Ein Auslösen einer sicheren Reaktion kann beispielsweise erreicht werden, indem bestimmte gemessene Sensorwerte bestimmte, im sicherheitsgerichteten System vorgegebene Grenzwerte überschreiten. Weiterhin kann auch das Vorliegen eines bestimmten Sensorwerts eine entsprechende sichere Reaktion auslösen. Beispielsweise für solche Sensorwerte können beispielsweise der Sensorwert einer Lichtschranke oder eines Berührungsschalters sein, oder auch Messwerte für bestimmte Temperaturen, gemessene Schadstoffkonzentrationen, bestimmte akustische Informationen, Helligkeitswerte o. ä. Sensorwerte sein. Entsprechende Sensoren können beispielsweise jegliche Art von Licht- oder Berührungssensoren, Temperatursensoren, verschiedenste Kameras oder vergleichbare Sensoren sein.

Weiterhin kann das Auslösen einer sicheren Reaktion im Rahmen einer sicherheitsgerichteten Steuerung beispielsweise auch dadurch erreicht werden, dass bestimmte, im Rahmen der sicherheitsgerichteten Steuerung verwendete Variablen vorbestimmte Werte einnehmen oder bestimmte Grenzwerte über- und/oder unterschreiten. Solche Variablen können beispielsweise Variablen sein, welche in einem sogenannten Prozessabbild einer speicherprogrammierbaren Steuerung gespeichert sind oder/und im Rahmen des Ablaufs eines sicherheitsgerichteten Steuerprogramms verwendet werden. Weiterhin können derartige Variablen auch beispielsweise sogenannte Flags oder auch sogenannte Tags sein, wie sie im Rahmen der Steuerung eines Systems oder eines entsprechenden SCADA-Systems (SCADA: Supervisory Control and Data Acquisition; z.B. ein Bedienen- und Beobachten-System) verwendet werden können.

Die sicherheitsgerichtete Kommunikationsverbindung kann beispielsweise als ein sicheres Übertragungssystem z. B. nach der Norm IEC 61784-3, ausgebildet und eingerichtet sein.

Beispielsweise kann die sicherheitsgerichtete Kommunikationsverbindung als eine Kommunikationsverbindung über ein Feldbusprotokoll, ein Ethernet-Protokoll oder auch ein industrielles Ethernet-Protokoll ausgebildet und eingerichtet sein, auf welcher weiterhin ein Sicherheitsprotokoll implementiert ist. Solche Sicherheitsprotokolle können beispielsweise nach dem sogenannten "ProfiSafe"-Standard oder vergleichbaren Standards ausgebildet und eingerichtet sein.

Dabei kann die Vorrichtung oder Anlage und/oder die Cloud oder Cloud-Plattform jeweils eine Kommunikations-Schnittstelle umfassen, die zur Kommunikation über die sicherheitsgerichtete Kommunikationsverbindung ausgebildet und eingerichtet ist.

Weiterhin ist die Cloud-Plattform auch derart ausgebildet und eingerichtet, dass eine sicherheitsgerichtete Kommunikationsverbindung beispielsweise auch zwischen einer o.g. Kommunikations-Schnittstelle der Cloud-Plattform um der sicherheitsgerichteten Steuerungsapplikation innerhalb der Cloud-Plattform vorliegt.

In einer Ausführungsform kann die Kommunikationsschnittstelle eine drahtgebundene Kommunikationsschnittstelle mit Anschlussports für eine drahtgebundene Kommunikationsverbindung, insbesondere Ethernet-Ports oder USB-Ports, sein. Alternativ kann die Kommunikationsschnittstelle auch als eine drahtlose Kommunikationsschnittstelle für eine drahtlose Kommunikation ausgebildet und eingerichtet sein, z.B. als WLAN-, Bluetooth- und/oder Mobilfunk-Schnittstelle.

In einer möglichen Ausführungsform kann eine Kommunikationsschnittstelle dazu ausgebildet und eingerichtet sein, ein Anforderungssignal zum Aussenden eines abgesicherten Sensorwerts oder Steuerungsparameters über die sicherheitsgerichtete Kommunikationsverbindung zu empfangen und/oder entsprechend auf den Empfang des Anforderungssignals hin einen entsprechenden abgesicherten Sensorwert und/oder Steuerungsparameter über die sicherheitsgerichtete Kommunikationsverbindung auszusenden.

In einer vorteilhaften Ausgestaltung kann das Steuerungssystem eine zweite sicherheitsgerichtete Steuerungseinrichtung umfassen, welche zur Ausführung der mindestens einen ersten Sicherheitsfunktion und/oder mindestens einer zweiten Sicherheitsfunktion ausgebildet und eingerichtet ist.

Dabei sein die zweite sicherheitsgerichtete Steuerungseinrichtung und die Vorrichtung oder Anlage über eine zweite sicherheitsgerichtete Kommunikationsverbindung kommunikativ gekoppelt.

Die zweite sicherheitsgerichtete Steuerungseinrichtung kann beispielsweise entsprechend der ersten sicherheitsgerichteten Steuerungseinrichtung gemäß der vorliegenden Beschreibung ausgebildet und eingerichtet sein.

Die zweite sicherheitsgerichtete Kommunikationsverbindung kann z.B. über dasselbe physikalische Medium (z.B. dieselbe Leitung oder beide drahtlos) ablaufen oder auch über verschiedene physikalische Medien (z.B. verschiedene Leitungen). Dabei kann die zweite sicherheitsgerichtete Kommunikationsverbindung weiterhin entsprechend der ersten sicherheitsgerichteten Kommunikationsverbindung gemäß der vorliegenden Beschreibung ausgebildet und eingerichtet sein.

Weiterhin kann ein Steuerungssystem gemäß der vorliegenden Beschreibung derart ausgebildet und eingerichtet sein, dass die zweite sicherheitsgerichtete Steuerungseinrichtung zur Ausführung der mindestens einen ersten und/oder zweiten Sicherheitsfunktion als eine in der Cloud implementierte zweite sicherheitsgerichtete Steuerungsapplikation (250) ausgebildet und eingerichtet ist. Alternativ kann die zweite sicherheitsgerichtete Steuerungseinrichtung (250) zur Ausführung der mindestens einen ersten und/oder zweiten Sicherheitsfunktion als eine baulich separate elektronische sicherheitsgerichtete Steuereinrichtung (250) ausgebildet und eingerichtet sein.

Die baulich separate elektronische Steuereinrichtung kann als eine so genannte speicherprogrammierbare Steuerung (SPS) ausgebildet und eingerichtet sein, zum Beispiel eine so genannte modulare speicherprogrammierbare Steuerung. Bei der Steuerung kann es sich weiterhin auch um jede Art von Computer oder Computersystem handeln, die zur Steuerung einer Vorrichtung oder Anlage gebaut und eingerichtet wurde. Bei der Steuerung kann es sich beispielsweise auch um einen Computer oder ein Computersystem handeln, auf der eine Steuerungssoftware oder eine Steuerungssoftware-Anwendung, z.B. eine Steuerungsapplikation, läuft.

Das dies sicherheitsgerichtete Steuerungseinrichtung als eine baulich separate elektronische sicherheitsgerichtete Steuereinrichtung ausgebildet und eingerichtet ist, kann beispielsweise derart ausgebildet und eingerichtet sein, dass eine als Hardware ausgebildete elektronische Steuereinrichtung ganz oder teilweise von einem Gehäuse umgeben ist bzw. ein Gehäuse aufweist oder umfasst. Dabei kann die elektronische Steuerungseinrichtung beispielsweise frei beweglich oder auch, beispielsweise über das Gehäuse, lösbar oder fest mit weiteren Einrichtungen, Gegenständen oder Vorrichtungen verbunden sein. Beispielsweise kann eine derartige elektronische Steuereinrichtung an einer Hutschiene befestigt oder befestigbar sein und über beispielsweise einen gemeinsamen Träger oder/und einen Stecker mit weiteren Teilen oder Modulen für die Steuerung einer Vorrichtung oder Anlage verbunden sein (z.B. über einen sogenannten Rückwandbus).

Dabei kann weiterhin auch vorgesehen sein, dass die zweite sicherheitsgerichtete Steuerungseinrichtung und/oder Steuerungsapplikation mit der Vorrichtung oder Anlage über eine zweite sicherheitsgerichtete Kommunikationsverbindung kommunikativ gekoppelt sind.

Diese vorteilhafte Ausgestaltung, bei der das Steuerungssystem eine zweite sicherheitsgerichtete Steuerungseinrichtung umfasst, ermöglicht beispielsweise folgende Varianten zur sicherheitsgerichteten Steuerung einer Vorrichtung oder Anlage:
- 1. Variante: Einige Sicherheitsfunktionen werden in der Cloud bearbeitet, die anderen nach wie vor auf einer als Hardware ausgebildeten Safety-Steuerung vor Ort (interessant für Erweiterungen von Brown Field).
   Anstelle der gesamten Safety-Applikation laufen in diesem Fall nur einige Sicherheitsfunktionen in der Cloud (zeitweise oder permanent). Diese zeitweise Nutzung der Cloud ist besonders dann sinnvoll, wenn die laufende Anlage weiterbetrieben werden soll, aber manche Safety-Komponenten ausgetauscht bzw. erneuert werden müssen (Einsparung von Stillstandszeiten von Brown Field Applikationen).
   In diesem Fall können dann die in der auszutauschenden elektronischen Safety-Komponente implementierten Safety-Funktionen in die Cloud verlagert werden, um dann nachfolgend diese Safety-Komponente auszutauschen bzw. zu erneuern. Nach erfolgtem Austausch können dann die entsprechenden Safety-Funktionen wieder zurück von der Cloud, in die dann ausgetauschte bzw. erneuerte elektronische Safety-Komponente verlagert werden. Hier wird die Safety-Eigenschaft dieser Sicherheitsfunktionen durch die zeitweise Verlagerung in die Cloud sichergestellt.
- 2. Variante: Die Sicherheitsfunktionen der Safety-Steuerung werden redundant (also zusätzlich) in der Cloud bearbeitet. Nur wenn beide Kanäle identische Ergebnisse liefern, werden sie wirksam, ansonsten wird der sichere Zustand eingenommen. Die gesamte Sicherheit ergibt sich aus der Redundanz. (Interessant für Erweiterungen von Brown Field).
   Zusätzlich zu einer bestehenden Safety-Applikation in einer sicherheitsgerichteten elektronischen Steuereinrichtung läuft eine Kopie der Safety-Applikation (ein zusätzlicher Kanal) in der Cloud (Redundanz). Dadurch kann die Safety aufrechterhalten werden, wenn die bestehende Safety-Applikation nicht mehr unverändert genutzt werden kann oder darf. Hier ist eine Verknüpfung der Kanäle implementiert (Redundanz für Safety), wobei die dabei entstehende Redundanz Safety-relevant ist. Das bedeutet, dass verschiedene Werte der Kanäle ein Safety-Problem anzeigen, auf das sicher reagiert werden muss. Hier können Stillstandszeiten verkürzt werden. Die ursprüngliche Safety-Steuerung wird zwar weiterverwendet, aber die Verknüpfung der Kanäle erfordert zusätzliche Hard- und/oder Software. (Besonders für Brown-Field interessant).
- 3. Variante: Die Sicherheitsfunktionen der Safety-Steuerung werden redundant in der Cloud bearbeitet. Allerdings dient hier die Redundanz der Verfügbarkeit: Wenn ein Kanal ausfällt, kann der andere Kanal weiterarbeiten. Jeder Kanal ist ausreichend sicher, beispielsweise über die Verwendung von Coded-Processing in jeder der Steuerungen.
   Die gesamte Safety-Applikation wird dupliziert, so dass sowohl eine in einer sicherheitsgerichteten elektronischen Steuerung implementierte lokale Safety-Applikation als auch eine parallele Safety-Applikation in der Cloud bereits allein die notwendige Sicherheit erbringt (Redundanz für Verfügbarkeit). Sollte innerhalb einer Safety-Applikation ein Fehler auftreten, wird der andere Kanal weiterarbeiten und die Safety gewährleisten (Failsafe-Hochverfügbar-System). Hier wird die Verfügbarkeit der gesamten Anlage erhöht.

Weiterhin kann ein Steuerungssystem gemäß der vorliegenden Beschreibung derart ausgebildet und eingerichtet sein, dass die zweite sicherheitsgerichtete Steuerungseinrichtung zur Ausführung der mindestens einen ersten Sicherheitsfunktion ausgebildet und eingerichtet ist, und
dass die erste und die zweite sicherheitsgerichtete Steuerungseinrichtung zur parallelen Ausführung der mindestens einen ersten Sicherheitsfunktion ausgebildet und eingerichtet sind.

Dabei kann das Steuerungssystem in Bezug auf die mindestens eine erste Sicherheitsfunktion beispielsweise gemäß der vorstehend genannten Variante zwei oder Variante drei ausgebildet und eingerichtet sein. Dabei wäre beispielsweise, je nach gewählter Variante, eine Redundanz zwischen der ersten und zweiten sicherheitsgerichteten Steuerungseinrichtung bezüglich der mindestens einen ersten Sicherheitsfunktion gegeben, wobei die Redundanz beispielsweise Sicherheits-relevant ausgebildet sein kann. In diesem Fall kann das Steuerungssystem beispielsweise derart ausgebildet und eingerichtet sein, dass das Erreichen eines sicheren Zustands ausgelöst wird, wenn bei der Ausführung der mindestens einen ersten Sicherheitsfunktion in der ersten und zweiten sicherheitsgerichteten Steuerungseinrichtung unterschiedliche Ergebnisse erzeugt werden.

Die Redundanz kann weiterhin beispielsweise auch, wie vorstehend bereits erwähnt, zum Erreichen einer erhöhten Verfügbarkeit ausgebildet und eingerichtet sein. Dabei übernimmt dann beim Auftreten eines Fehlers in einer der beiden sicherheitsgerichteten Steuerungseinrichtungen bei der Ausführung der mindestens einen ersten Sicherheitsfunktion die jeweils andere der sicherheitsgerichteten Steuerungseinrichtungen die Steuerung.

In einer vorteilhaften Ausgestaltung können die erste und zweite sicherheitsgerichtete Steuerungseinrichtung derart ausgebildet und eingerichtet sein, dass nach einer parallelen Ausführung der mindestens einen ersten Sicherheitsfunktion durch die erste und zweite sicherheitsgerichtete Steuerungseinrichtung jeweils ein Ergebnis der jeweiligen Ausführung der mindestens einen ersten Sicherheitsfunktion vorliegt und dann eine Fehlermaßnahme ausgelöst wird, wenn sich die Ergebnisse unterscheiden, insbesondere, dass als Fehlermaßnahme das Einnehmen eines sicheren Zustands durch die Vorrichtung oder Anlage (400, 420, 430) vorgesehen ist.

Die Sicherheitsfunktionen der Safety-Steuerung werden redundant (also zusätzlich) in der Cloud bearbeitet. Nur wenn beide Kanäle identische Ergebnisse liefern, werden sie wirksam, ansonsten wird der sichere Zustand eingenommen. Die Sicherheit ergibt sich dann, zumindest teilweise, aus der Redundanz. Interessant ist diese Ausgestaltung der Erfindung beispielsweise für Erweiterungen von sogenannten "Brown Field"-Anlagen, wo z.B. durch eine Safety-Steuerung in einer Cloud zusätzlich zu einer bestehenden Steuerung an der Anlage oder Vorrichtung eine sichere Steuerung für die Anlage oder Vorrichtung erreicht werden kann.

Eine Fehlermaßnahme kann, wie bereits beschrieben, beispielsweise das Einnehmen eines sicheren Zustands, das Ausgeben einer Fehlermeldung, das Ausgeben von einem oder mehreren Warnsignalen (beispielsweise Warntöne und/oder Lichtzeichen), das Abschalten einer Stromversorgung und/oder vergleichbare Maßnahmen umfassen.

In einer alternativen Ausgestaltung dazu kann vorgesehen sein, dass bei einer fehlerhaften Ausführung der mindestens einen ersten Sicherheitsfunktion durch eine der beiden sicherheitsgerichteten Steuerungseinrichtungen das Ergebnis der Ausführung der mindestens einen ersten Sicherheitsfunktion durch die andere sicherheitsgerichtete Steuerungseinrichtung zur Steuerung der Vorrichtung oder Anlage verwendet wird.

Dabei kann eine fehlerhafte Ausführung beispielsweise dann vorliegen, wenn bei einer Ausführung einer Sicherheitsfunktion ein Fehler erkannt wird.

Ein solcher Fehler kann z.B. erkannt werden, wenn bei einer parallelen Ausführung der Sicherheitsfunktion innerhalb einer sicherheitsgerichteten Steuerung ungleiche Ergebnisse oder Zwischenergebnisse festgestellt werden. Weiterhin kann ein Fehler beispielsweise dann erkannt werden, wenn im Rahmen der Ausführung einer Sicherheitsfunktion vermittels eines "Coded Processing"- und/oder "Diversified Encoding"-Verfahrens ein Fehler festgestellt wird.

Eine fehlerhafte Ausführung kann beispielsweise auch dann vorliegen, wenn die Ausführung der mindestens einen Sicherheitsfunktion innerhalb einer der sicherheitsgerichteten Steuerungen kein Ergebnis liefert, wobei eigentlich ein Ergebnis geliefert werden müsste. Weiterhin kann eine fehlerhafte Ausführung beispielsweise auch dann vorliegen, wenn im Rahmen der Ausführung der mindestens einen Sicherheitsfunktion innerhalb einer der sicherheitsgerichteten Steuerungen eine Fehlermeldung durch die entsprechende Steuerung erzeugt und/oder ausgegeben wird.

Mit dieser Ausgestaltung werden die Sicherheitsfunktionen der Safety-Steuerungen redundant z.B. in der Cloud, lokal, oder auch je eine in der Cloud und eine lokal, bearbeitet. Die Redundanz dient bei dieser Ausgestaltung, zumindest unter anderem, der Verfügbarkeit: Wenn ein Kanal ausfällt, kann der andere Kanal weiterarbeiten. Dabei können die jeweiligen Sicherheitsfunktionen innerhalb der Safety-Steuerungen beispielsweise jeweils jede für sich bereits ausreichend sicher implementiert sein, beispielsweise durch Verwendung des sogenannten "Coded Processing".

In einer vorteilhaften Ausgestaltung kann ein Steuerungssystem gemäß der vorliegenden Beschreibung derart ausgebildet und eingerichtet sein, dass die Ausführung der mindestens einen ersten Sicherheitsfunktion durch die erste sicherheitsgerichtete Steuerungsapplikation,
und/oder die Ausführung der mindestens einen ersten und/oder zweiten Sicherheitsfunktion durch die zweite sicherheitsgerichtete Steuerungseinrichtung,
unter Verwendung eines "Coded Processing"-Verfahrens erfolgt.

In einer weiteren vorteilhaften Ausgestaltung kann weiterhin vorgesehen sein, dass die Ausführung der mindestens einen ersten Sicherheitsfunktion durch die erste sicherheitsgerichtete Steuerungsapplikation,
und/oder die Ausführung der mindestens einen ersten und/oder zweiten Sicherheitsfunktion durch die zweite sicherheitsgerichtete Steuerungseinrichtung,
unter Verwendung eines "Diversified Encoding"-Verfahrens unter Verwendung von Coded Processing erfolgt.

Die Durchführung bzw. Verwendung eines Coded Processing - Verfahrens ermöglicht es, Programmabläufe zur Steuerung von Maschinen oder Anlagen sicherheitsgerichtet ablaufen zu lassen, unabhängig von einer verwendeten Hardware. Dadurch können entsprechende Steuerungssysteme beispielsweise noch flexibler gestaltet werden.

Allgemein, und im Zusammenhang mit der vorliegenden Beschreibung, wird unter "Coded Processing", bzw. einem "Coded Processing" - Verfahren, eine Software-Lösung verstanden, die auch als "Software Coded Processing" bezeichnet wird. Wegen ihrer Hardware-Unabhängigkeit bietet diese Lösung die Flexibilität, sicherheitskritische Systeme mit nicht-sicherheitskritischer Hardware zu bauen.

Dabei kann ein Coded-Processing-Verfahren beispielsweise derart ausgebildet und eingerichtet sein, dass durch Durchführung einer Codierung eines entsprechenden Programmcodes, und/oder einer Codierung von Daten, die durch den Programmcode dann verarbeitet werden, und nachfolgend entsprechenden Prüfungsschritten unter Verwendung der verarbeiteten Daten, eine Prüfung auf bestimmte mögliche während des Progammablaufs des Programmcodes aufgetretene Fehlfunktionen ermöglicht wird.

Die ISO-Norm 26262 listet Coded Processing in Band 5 unter D2.3.6 als eine Technologie auf, um Hardware-Ausführungsfehler aufzudecken (ISO/DIS 26262 - Road vehicles - Functional safety, Technical Report, Geneva, Switzerland, July 2011). In der IEC-Norm 61508 wird Coded Processing in Band 2 in A.4 (Functional safety of electrical/electronic/programmable electronic safety-related systems. Technical Report IEC 61508, The International Electrotechnical Commission, 3, Rue de Varembe, Case postale 131, CH-1211 Geneve 20, Switzerland, 2010.) als eine Lösungsmöglichkeit gelistet, um Ausführungsfehler in sicherheitsgerichteten Steuerungssystemen erkennen zu können.

Software Coded Processing (SCP) baut auf der Coded Processing Technologie von P. Forin auf (P. Forin, Vital coded microprocessor principles and application for various transit systems, IFA-GCCT, pages 79-84, Sept 1989). SCP fügt Informationsredundanz zu einem Software-Programm hinzu, um Ausführungsfehler aufzudecken. Um SCP in ein Software-Programm zu integrieren, muss das Programm entweder manuell umgeschrieben werden oder es kann ein automatisiert arbeitendes Code-Transformationswerkzeug genutzt werden. SCP wird auf den gesamten sicherheitskritischen Datenfluss eines Programmes angewendet: alle Konstanten, Variablen und Operation müssen kodiert werden, um SCP verwenden zu können.

In der Literatur werden verschiedene Kodierungen und Ausgestaltungsmöglichkeiten für Coded Processing und Diversified Encoding beschrieben. Siehe diesbezüglich z.B. in:
- P. Forin. Vital coded microprocessor principles and application for various transit systems. In IFA-GCCT, pages 79-84, Sept 1989;
- Ute Schiffel, Martin Süßkraut, and Christof Fetzer. Anencoding compiler: Building safety-critical systems with commodity hardware. In SAFECOMP'09: Proceedings of the 28th International Conference on Computer Safety, Reliability, and Security, pages 283-296, Berlin, Heidelberg, 2009. Springer-Verlag;
- Ute Schiffel, Andre Schmitt, Martin Süßkraut, and Christof Fetzer. ANB-and ANBDmem-Encoding: Detecting Hardware Errors in Software. In Erwin Schoitsch, editor, Computer Safety, Reliability, and Security, volume 6351 of Lecture Notes in Computer Science, pages 169-182. Springer Berlin / Heidelberg, 2010;
- Oh, N.; Mitra, S.; McCluskey, E.J., "ED4I: error detection by diverse data and duplicated instructions", IEEE Transactions on Computers, vol. 51, issue 2, p. 180 - 199; und
- Deutsche Patentschrift DE 10 219 501 B4.

Einer der verbreitetsten Kodierungen im Rahmen eines Coded Processing ist die AN-Kodierung: Jeder Wert im Programm wird mit einer Konstante A vervielfacht. Werte, die kein Vielfaches von A sind, werden als ungültig gewertet. Mit SCP müssen alle Operationen mit diesen kodierten Werten arbeiten. Ein Ausführungsfehler erzeugt ungültig kodierte Werte.

Eine Häufige Anwendung der Coded Processing Methodik im Bereich der Realisierung von funktionaler Sicherheit ist das sogenannte "Diversified Encoding mit Software Coded Processing" - Verfahren. Hierbei wird durch die Kombination des sogenannten "Diversified Encoding" mit dem "Coded Processing" eine flexible Lösung zur Aufdeckung von Ausführungsfehlern erreicht, die die Möglichkeit bietet, die Sicherheitslevel ASIL-D und SIL-4 zu erreichen.

Dabei beruht das oben genannte "Diversified Encoding" auf zwei unterschiedlichen Ausführungen derselben Sicherheitsfunktion. Diese zwei Ausführungen sind:
- Native Ausführung: Die native Ausführung entspricht der Ausführung der originalen Sicherheitsfunktion ohne Kodierung. Der Quellcode für die originale Sicherheitsfunktion bildet dabei den Quellcode der nativen Ausführung. Die native Ausführung arbeitet auf nativen (originalen) Eingabewerten und dem nativen Zustand. Sie ändert nur den nativen Zustand. Das Ergebnis der nativen Ausführung ist die native Ausgabe.
- Kodierte Ausführung: Die kodierte Ausführung (unter Verwendung des Coded Processing) basiert auf der kodierten Variante der Sicherheitsfunktion. Sie arbeitet auf kodierten Eingabewerten und dem kodierten Zustand. Das Ergebnis ist die kodierte Ausgabe.

Beide Ausführungen sind vollkommen unabhängige Berechnungen, die jedoch auf denselben Werten operieren. Die kodierten Eingabewerte sind die kodierten Varianten der nativen Eingabewerte. Der Quellcode der nativen Sicherheitsfunktion wird verwendet, um den Quellcode der kodierten Ausführung zu erstellen. Die Erstellung kann entweder manuell oder - empfohlen für die Reproduzierbarkeit - mit einem Werkzeug erfolgen.

Die Komponente, die die Sicherheitsfunktion aufruft, erkennt und behandelt Ausführungsfehler mit der Hilfe von Checksummen. Das sogenannte "Diversity Framework" erzeugt zwei Checksummen: eine über die nativen Ausgabewerte und eine über die kodierten Ausgabewerte. Die Aufruferkomponente arbeitet ausschließlich mit den nativen Ein- und Ausgaben. Nachdem die Sicherheitsfunktion ausgeführt wurde, muss die Aufruferkomponente die Checksumme über die nativen Ausgaben mit der Checksumme über die kodierten Ausgaben vergleichen. Sind die Checksummen verschieden, wurde ein Ausführungsfehler aufgedeckt und muss behandelt werden.

Ein Steuerungssystem gemäß der vorliegenden Beschreibung kann weiterhin derart ausgebildet und eingerichtet sein,
dass zur Steuerung der Vorrichtung oder Anlage weiterhin mindestens eine Betriebsfunktion vorgesehen ist,
wobei das Steuerungssystem weiterhin eine mit der Vorrichtung oder Anlage kommunikativ gekoppelte weitere Steuerungseinrichtung zur Ausführung der mindestens einen Betriebsfunktion umfasst.

Dabei können die Betriebsfunktion sowie die Steuerungseinrichtung beispielsweise gemäß der vorliegenden Beschreibung ausgebildet und eingerichtet sein. Weiterhin kann die weitere Steuerungseinrichtung beispielsweise als eine sicherheitsgerichtete oder eine nicht-sicherheitsgerichtete Steuerungseinrichtung ausgebildet und eingerichtet sein.

Diese Ausgestaltung ermöglicht es, neben sicherheitsgerichteten Funktionalitäten bezüglich einer Vorrichtung oder Anlage, parallel auch Funktionalitäten auszuführen, die entsprechende sicherheitsgerichtete Kriterien nicht erfüllen müssen, ohne dafür sicherheitsgerichtete Steuerungen bzw. Steuerungsapplikationen des Steuerungssystems verwenden zu müssen. Durch Verwendung einer weiteren Steuerungseinrichtung zur Durchführung solcher Betriebsfunktionen wird es zum Beispiel ermöglicht, dafür eine nicht-sicherheitsgerichtete Steuerungseinrichtung zu verwenden. Solche nicht-sicherheitsgerichteten Steuerungseinrichtungen sind in der Regel technisch einfacher zu realisieren und auch billiger. Auf diese Weise lassen sich die verwendeten Steuerungen effizienter und zielgerichteter einsetzen, was die Flexibilität einer entsprechenden Steuerung weiter erhöht.

Das Steuerungssystem kann in diesem Fall beispielsweise derart ausgebildet und eingerichtet sein, dass die weitere Steuerungseinrichtung zur Ausführung der mindestens einen Betriebsfunktion als eine in der Cloud implementierte zweite Steuerungsapplikation ausgebildet und eingerichtet ist.

Alternativ kann das Steuerungssystem auch derart ausgebildet und eingerichtet sein, die weitere Steuerungseinrichtung zur Ausführung der mindestens einen Betriebsfunktion als eine baulich separate elektronische Steuereinrichtung ausgebildet und eingerichtet ist.

Dass die weitere Steuerungseinrichtung baulich separat ausgebildet ist, kann beispielsweise derart ausgebildet und eingerichtet sein, dass die weitere Steuerungseinrichtung ein Gehäuse aufweist oder umfasst. Dass die weitere Steuerungseinrichtung baulich separat ausgebildet ist, kann weiterhin entsprechend der vorliegenden Beschreibung ausgestaltet und eingerichtet sein.

Hierbei ist z.B. eine Benutzung der Cloud für sowohl für die Safety- als auch die reguläre Steuerung möglich. Diese Ausgestaltung ermöglicht beispielsweise ein System, in welchem Sicherheits- und Betriebsfunktionen vollständig in der Cloud bearbeitet werden. Zur Sicherstellung der Sicherheit des Systems ist eine sichere Kommunikation zwischen Saftey-Steuerung und der Vorrichtung oder Anlage, z.B. unter Verwendung des sogenannten PROFIsafe-Protokolls, notwendig.

Die vorstehend genannten Aufgabe wird weiterhin gelöst durch ein Verfahren zum Betrieb eines Steuerungssystems gemäß der vorliegenden Beschreibung, wobei
- eine Anlageninformation über die erste sicherheitsgerichtete Kommunikationsverbindung von der Vorrichtung oder Anlage zur ersten sicherheitsgerichteten Steuerungsapplikation in die Cloud übertragen wird,
- dann die mindestens eine Sicherheitsfunktion unter Verwendung der Anlageninformation durch die erste sicherheitsgerichtete Steuerungsapplikation ausgeführt wird, und
- nachfolgend eine Steuerinformation für die Vorrichtung oder Anlage von der ersten sicherheitsgerichteten Steuerungsapplikation über die erste sicherheitsgerichtete Kommunikationsverbindung an die Vorrichtung oder Anlage übertragen wird.

Ein solches Verfahren ermöglicht beispielsweise eine Benutzung der Cloud als zeitweisen oder permanenten Ersatz für eine separate Safety-Steuerung. Die Sicherheitsfunktionen werden dabei vollständig in der Cloud bearbeitet. Eine sichere Kommunikation zwischen der ersten sicherheitsgerichteten Steuerungsapplikation und der Vorrichtung oder Anlage, z.B. unter Verwendung des sogenannten PROFIsafe-Kommunikationsprotokolls, ist vorteilhaft oder gegebenenfalls auch notwendig, um Nachrichtenfehler auf dem Weg zur Cloud und von der Cloud aufzudecken.

Unter Verwendung eines solchen Verfahrens kann z.B. ein entsprechendes sicherheitsgerichtetes Steuerungssystem flexibler an jeweilige Situationen angepasst werden.

Dabei können Anlageninformationen jegliche Art von Informationen von der Vorrichtung oder Anlage sein, welche für eine Steuerung der Vorrichtung oder Anlage verwendet werden oder notwendig sind. Dies können beispielsweise jegliche Arten von Sensordaten, Messdaten, Eigenschafts-Daten, Netzwerkadressen, Kommunikationsinformationen oder weitere Informationen bezüglich der Vorrichtung oder Anlage, oder eines Zustands der Vorrichtung oder Anlage, sein.

Dass die mindestens eine Sicherheitsfunktion unter Verwendung solcher Anlageninformationen ausgeführt wird, kann beispielsweise derart ausgebildet und eingerichtet sein, dass die oben genannten Anlageninformationen beispielsweise durch die erste sicherheitsgerichtete Steuerungsapplikation verarbeitet werden, wobei, zumindest unter anderem, die entsprechenden Steuerinformationen für die Vorrichtung oder Anlage erzeugt werden.

Solche Steuerinformationen können jegliche Art von Daten oder Informationen sein, welche von der Vorrichtung oder Anlage verarbeitet und/oder umgesetzt werden können bzw. umgesetzt werden, wenn Sie über eine Kommunikationsverbindung an die Vorrichtung oder Anlage übertragen wurden.

Diese Ausgestaltung ermöglicht es z.B., dass alle Saftey-Funktionen in der Cloud bearbeitet werden. Weiterhin können auch einige Safety-Funktionen in der Cloud bearbeitet werden, die anderen nach wie vor auf der Safety-Steuerung vor Ort (interessant für Erweiterungen von Brown Field).

Das Verfahren kann weiterhin derart ausgestaltet sein, dass eine Anlageninformation sowohl über die erste sicherheitsgerichtete Kommunikationsverbindung von der Vorrichtung oder Anlage zur ersten sicherheitsgerichteten Steuerungsapplikation in die Cloud und als auch über die zweite Sicherheitsgerichtete Kommunikationsverbindung zur zweiten sicherheitsgerichteten Steuerungseinrichtung (250) übertragen wird, und dann

die mindestens eine Sicherheitsfunktion unter Verwendung der Anlageninformation durch die erste sicherheitsgerichtete Steuerungsapplikation ausgeführt wird, wobei ein erstes Ergebnis erzeugt wird, und weiterhin
die mindestens eine Sicherheitsfunktion unter Verwendung der Anlageninformation durch die zweite sicherheitsgerichtete Steuerungseinrichtung (250) ausgeführt wird, wobei ein zweites Ergebnis erzeugt wird.
Danach erfolgt dann ein Vergleich des ersten und zweiten Ergebnisses,
wobei bei übereinstimmenden Ergebnissen eine Steuerinformation für die Vorrichtung oder Anlage von der ersten sicherheitsgerichteten Steuerungsapplikation über die erste sicherheitsgerichtete Kommunikationsverbindung an die Vorrichtung oder Anlage übertragen wird,
oder
bei übereinstimmenden Ergebnissen eine Steuerinformation für die Vorrichtung oder Anlage von der zweiten sicherheitsgerichteten Steuerungseinrichtung über die zweite sicherheitsgerichtete Kommunikationsverbindung an die Vorrichtung oder Anlage übertragen wird.

Vermittels dieses Verfahrens können zwei parallele Steuerungseinrichtungen bzw. Steuerungsapplikation eine sicherheitsgerichtete Funktionalität derart erzeugen, dass parallel auf beiden dieselbe Sicherheitsfunktion ausgeführt wird, und nur, wenn beide dasselbe Ergebnis erhalten, dies auch zu einer entsprechenden Steuerungs Aktion der Vorrichtung oder Anlage herangezogen wird.

Erzeugen beide Steuerungen verschiedene Ergebnisse, so kann beispielsweise eine Fehlermaßnahme gemäß der vorliegenden Beschreibung ausgelöst werden, wie beispielsweise das Erreichen eines sicheren Zustands.

Dabei ist eine der Steuerungen in der Cloud implementiert, während die zweite Steuerung entweder in der Cloud implementiert sein kann oder als entsprechende Steuerungshardware.

Auch hier ermöglicht das Verfahren beispielsweise eine Benutzung der Cloud als z.B. zeitweisen oder auch permanenten Ersatz für eine separate Safety-Steuerung.

Auch hier kann daher unter Verwendung eines solchen Verfahrens z.B. ein entsprechendes sicherheitsgerichtetes Steuerungssystem flexibler an jeweilige Situationen angepasst werden.

Dabei kann das vorstehend erläuterte Verfahren weiterhin derart ausgebildet und eingerichtet sein, dass nur bei übereinstimmenden Ergebnissen eine Steuerinformation für die Vorrichtung oder Anlage von der sicherheitsgerichteten Steuerungsapplikation über die erste sicherheitsgerichtete Kommunikationsverbindung an die Vorrichtung oder Anlage übertragen wird.

Das vorstehend beschriebene Verfahren kann weiterhin derart ausgebildet und eingerichtet sein, dass bei nicht-übereinstimmenden Ergebnissen eine entsprechende Fehlermaßnahme ausgelöst wird. Eine solche Fehlermaßnahme kann beispielsweise das Einnehmen eines sicheren Zustands durch die entsprechende Vorrichtung oder Anlage sein oder umfassen. Weiterhin kann eine solche Fehlermaßnahme die Ausgabe einer Warnmeldung und/oder eines Warnsignals und/oder das Abschalten einer Stromversorgung sein oder umfassen. Eine solche Fehlermaßnahme bzw. das Auslösen einer solchen Fehlermaßnahme kann auch gemäß der vorliegenden Beschreibung ausgebildet und eingerichtet sein.

Eine Anlageninformation kann beispielsweise gemäß der vorliegenden Beschreibung ausgestaltet und eingerichtet sein. Sie kann z.B. ein Sensor- oder Messwert, eine Information bezüglich der Anlage bzw. einer oder mehrerer Komponenten der Anlage, eine Information bezüglich eines Zustands der Anlage bzw. einer oder mehrerer Komponenten der Anlage oder eine vergleichbare Information sein oder solche Informationen umfassen.

Ein gemäß dem vorstehend beschriebenen Verfahren erzeugtes Ergebnis kann dabei beispielsweise einer Steuerinformation gemäß der vorliegenden Beschreibung entsprechen. Weiterhin kann ein Ergebnis auch als jegliche Ausgabe ausgestaltet und eingerichtet sein, welche bei der Ausführung der Sicherheitsfunktion durch die entsprechende Steuerungseinrichtung oder Steuerungsapplikation erzeugt wird oder erzeugbar ist.

Auch die Steuerinformation kann gemäß der vorliegenden Beschreibung ausgebildet und eingerichtet sein. Dabei kann sie z.B. weiterhin dem bei der Ausführung der Sicherheitsfunktion erzeugten Ergebnis entsprechen, auf diesem Ergebnis beruhen oder eine weitere, vom Ergebnis unabhängige Information sein.

Die Safety-Funktionen der Safety-Steuerung werden redundant (also zusätzlich) in der Cloud bearbeitet. Nur wenn beide Kanäle identische Ergebnisse liefern, werden sie wirksam, ansonsten wird der sichere Zustand eingenommen. Die gesamte Sicherheit ergibt sich aus der Redundanz. (Interessant für Erweiterungen von Brown Field)

Weiterhin kann ein Verfahren zum Betrieb eines Steuerungssystems gemäß der vorliegenden Beschreibung auch derart ausgebildet und eingerichtet sein,
dass eine Anlageninformation sowohl über die erste sicherheitsgerichtete Kommunikationsverbindung von der Vorrichtung oder Anlage zur ersten sicherheitsgerichteten Steuerungsapplikation und
über die zweite sicherheitsgerichtete Kommunikationsverbindung zur zweiten sicherheitsgerichteten Steuerungseinrichtung übertragen wird,
dann die mindestens eine Sicherheitsfunktion unter Verwendung der Anlageninformation durch die erste sicherheitsgerichtete Steuerungsapplikation ausgeführt wird, und weiterhin
die mindestens eine Sicherheitsfunktion unter Verwendung der Anlageninformation durch die zweite sicherheitsgerichtete Steuerungseinrichtung ausgeführt wird.

Wird dabei eine fehlerhafte Ausführung der Sicherheitsfunktion in einer der beiden Steuerungseinrichtungen erkannt, erfolgt eine Ausgabe einer Steuerinformation für die Vorrichtung oder Anlage von der anderen der sicherheitsgerichteten Steuerungseinrichtungen über die zugehörige sicherheitsgerichtete Kommunikationsverbindung.

Bei dem vorgeschlagenen Verfahren können die Safety-Funktionen der Safety-Steuerung redundant bearbeitet werden. Allerdings dient hier, im Gegensatz zum davor beschriebenen Verfahren, die Redundanz der Verfügbarkeit: Wenn ein Kanal ausfällt, kann der andere Kanal weiterarbeiten. Jeder Kanal ist ausreichend sicher - z.B. durch die Verwendung eines Coded Processing - Verfahrens.

Vermittels des vorstehend beschriebenen Verfahrens können zwei parallele Steuerungseinrichtungen bzw. Steuerungsapplikation eine sicherheitsgerichtete Funktionalität derart erzeugen, dass parallel auf beiden dieselbe Sicherheitsfunktion ausgeführt wird. Dabei wird auf jeder der Steuerungen die sicherheitsgerichtete Funktionalität derart ausgeführt, dass beide jeweils für sich genommen den Kriterien an eine sicherheitsgerichtete Steuerung genügt, beispielsweise vermittels einer Durchführung durch Coded Processing.

Im Rahmen dieser Verfahrensvariante werden regelmäßig die Ergebnisse der Durchführung der sicherheitsgerichteten Funktionalität beider Steuerungen verglichen oder im Rahmen der Durchführung der sicherheitsgerichteten Funktionalitäten durch jede der Steuerung diese auf entsprechende fehlerhafte Ausführungen geprüft. Stimmen beide Ergebnisse überein oder wurde keine fehlerhafte Ausführung erkannt, so wird der gemeinsame erzeugte Wert für die Steuerung der Vorrichtung oder Anlage verwendet.

Wird bei der Durchführung der sicherheitsgerichteten Funktionalität in einer der Steuerungen eine fehlerhafte Ausführung erkannt, beispielsweise in einem Prüfungsschritt gemäß dem Coded Processing Verfahren, so wird für die Steuerung der Vorrichtung oder Anlage das Ergebnis der Durchführung der sicherheitsgerichteten Funktionalität der anderen Steuerung verwendet. Dies wird allerdings z.B. nur dann durchgeführt, wenn bei der Durchführung der sicherheitsgerichteten Funktionalität durch diese andere Steuerung nicht ebenfalls eine fehlerhafte Ausführung erkannt wurde.

Dabei ist eine der Steuerungen in der Cloud implementiert, während die zweite Steuerung entweder in der Cloud implementiert sein kann oder als entsprechende Steuerungshardware vorgesehen sein kann.

Auch hier ermöglicht das Verfahren beispielsweise eine Benutzung der Cloud als zeitweisen oder permanenten Ersatz für eine separate Safety-Steuerung.

Daher kann auch hier durch Verwendung eines solchen Verfahrens z.B. ein entsprechendes sicherheitsgerichtetes Steuerungssystem flexibler an jeweilige Situationen angepasst werden.

Die Anlageninformation, die Steuerinformation, die sicherheitsgerichtete Kommunikationsverbindungen, die Vorrichtung oder Anlage, die erste sicherheitsgerichtete Steuerungsapplikation, die zweite Sicherheitsgerichtete Steuereinrichtung, die mindestens eine Sicherheitsfunktion können dabei weiterhin gemäß der vorliegenden Beschreibung ausgebildet und eingerichtet sein.

In einer vorteilhaften Ausgestaltung kann ein Verfahren gemäß der vorliegenden Beschreibung derart ausgestaltet sein,
dass die Ausführung der Sicherheitsfunktion durch die erste sicherheitsgerichtete Steuerungsapplikation oder die erste sicherheitsgerichtete Steuerungseinrichtung,
und/oder die Ausführung der Sicherheitsfunktion durch die zweite sicherheitsgerichtete Steuerungseinrichtung,
unter Verwendung eines "Coded Processing"-Verfahrens erfolgt.

Weiterhin kann die Ausführung der mindestens einen ersten Sicherheitsfunktion durch die erste sicherheitsgerichtete Steuerungsapplikation oder die erste sicherheitsgerichtete Steuerungseinrichtung,
und/oder die Ausführung der mindestens einen ersten und/oder zweiten Sicherheitsfunktion durch die zweite sicherheitsgerichtete Steuerungseinrichtung,
auch unter Verwendung eines "Diversified Encoding"-Verfahrens unter Verwendung von "Coded Processing" erfolgen.

Dabei kann das "Coded Processing"-Verfahren bzw. das "Diversified Encoding"-Verfahren gemäß der vorliegenden Beschreibung ausgebildet und eingerichtet sein.

Die vorstehend genannte Aufgabe wird weiterhin gelöst durch eine Sicherheitsgerichtete Steuerungsapplikation für ein Steuerungssystem gemäß der vorliegenden Beschreibung,
wobei im Rahmen einer Ausführung eines entsprechenden Verfahrens gemäß der vorliegenden Beschreibung die sicherheitsgerichtete Steuerungsapplikation zum Vergleich des ersten und zweiten Ergebnisses ausgebildet und eingerichtet ist. Weiterhin ist die sicherheitsgerichtete Steuerungsapplikation dann auch bei Übereinstimmung des ersten und zweiten Ergebnisses zur Ausgabe der Steuerinformation für die für die Vorrichtung oder Anlage ausgebildet und eingerichtet ist.

Dabei kann die sicherheitsgerichtete Steuerungsapplikation beispielsweise gemäß der vorliegenden Beschreibung ausgebildet und eingerichtet sein.

Auch der Vergleich des ersten und zweiten Ergebnisses kann gemäß der vorliegenden Beschreibung ausgebildet und eingerichtet sein.

Weiterhin kann die Steuerungsapplikation beispielsweise derart ausgebildet und eingerichtet sein, dass sie zur Festlegung der Steuerungsapplikation bzw. Steuerungseinrichtung ausgebildet und eingerichtet ist, welche dann bei übereinstimmenden Ergebnissen dieses übereinstimmende Ergebnis zur Vorrichtung oder Anlage übermittelt. Eine derartige Festlegung, bzw. eine entsprechende Information bezüglich dieser Festlegung, kann beispielsweise in einer Speichereinrichtung gespeichert sein, auf welche die Steuerungsapplikation Zugriff hat. Weiterhin kann vorgesehen sein, dass im Rahmen der Steuerungsapplikation festgelegt oder festlegbar ist, dass eine Fehlermaßnahme ausgelöst wird, wenn die Ergebnisse nicht übereinstimmen. Weiterhin kann festgelegt sein, welche Fehlermaßnahme dann ausgelöst wird. Beispielsweise die Tatsache, dass eine Fehlermaßnahme ausgelöst wird, oder auch welche Fehlermaßnahme dies ist, kann jeweils ebenfalls in einer Speichereinrichtung gespeichert sein, auf welche die Steuerungsapplikation Zugriff hat.

Dabei kann die Fehlermaßnahme, sowie das Auslösen der Fehlermaßnahme, beispielsweise auch gemäß der vorliegenden Beschreibung ausgebildet und eingerichtet sein.

Weitere vorteilhafte Ausgestaltungen finden sich in den Unteransprüchen.

Nachfolgend wird die vorliegende Erfindung beispielhaft mit Bezug auf die beigefügten Figuren näher erläutert.

Es zeigen:
- Figur 1:: Beispiel für eine Anlagensteuerung mit einer sicherheitsgerichteten Steuerungsapplikation in der Cloud und einem Standard Controller als Hardware;
- Figur 2:: Beispiel für eine Anlagensteuerung mit einer sicherheitsgerichteten Steuerungsapplikation und einer Standard Steuerungsapplikation in der Cloud;
- Figur 3:: Beispiel für eine Anlagensteuerung mit einer ersten sicherheitsgerichteten Steuerungsapplikation in der Cloud und einem sicherheitsgerichteten Controller sowie einem Standardcontroller jeweils als Hardware;
- Figur 4:: Beispiel für eine Anlagensteuerung mit einer ersten sicherheitsgerichteten Steuerungsapplikation in der Cloud und einem sicherheitsgerichteten Controller sowie einem Standardcontroller jeweils als Hardware, wobei die erste sicherheitsgerichtete Steuerungsapplikation und der sicherheitsgerichtete Controller gekoppelt sind.

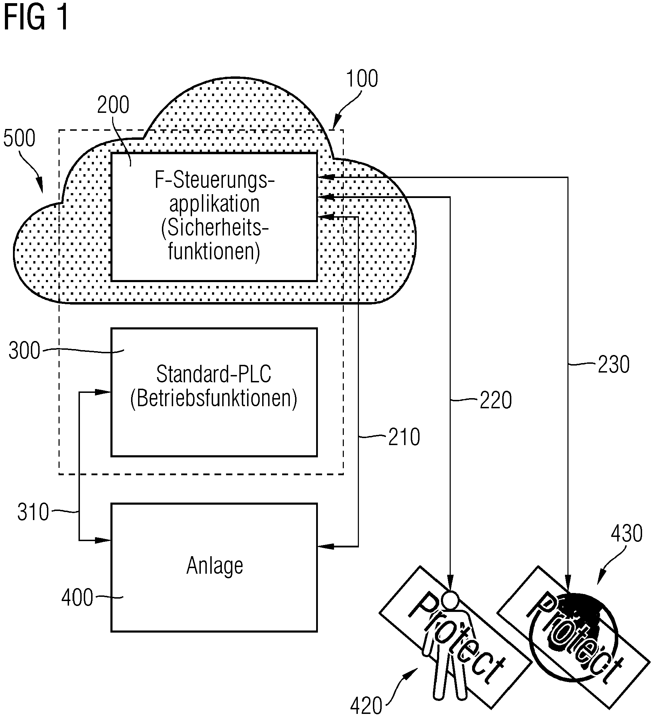

Figur 1 zeigt ein Steuerungssystem 100, welches eine sicherheitsgerichtete Steuerungsapplikation 200 umfasst, welche in einer Cloud 500 implementiert ist. Weiterhin umfasst das Steuerungssystem eine Standard-PLC 300 bzw. einen StandardController 300, der als eine Hardware-Steuerungseinrichtung ausgebildet und eingerichtet ist. Die sicherheitsgerichtete Steuerungsapplikation 200 ist über eine entsprechende sicherheitsgerichtete Kommunikationsverbindung 210 mit einer Anlage 400 verknüpft und steuert dort sicherheitsrelevante Vorgänge vermittels entsprechenden Anlagen-Sicherheitsfunktionen der sicherheitsgerichteten Steuerungsapplikation 200 über entsprechend in der Anlage 400 vorgesehene Sensoren und Aktoren.

Weiterhin ist die sicherheitsgerichtete Steuerungsapplikation 200 über eine weitere sicherheitsgerichtete Kommunikationsverbindung 220 mit einer Personenschutzeinrichtung 420 verbunden. In der sicherheitsgerichteten Steuerungsapplikation 420 sind weiterhin Personen-Sicherheitsfunktionen vorgesehen, welche mit entsprechenden Sensoren und Aktoren der Personenschutzeinrichtung 420 zum Schutz von die Anlage 400 bedienenden Personen zusammenwirken. Solch eine Personenschutzeinrichtung 420 kann beispielsweise entsprechende Schranken, Bewegungssensoren, Schließmechanismen, Lichtschranken, Not-Aus-Taster oder vergleichbares umfassen.

Weiterhin ist die sicherheitsgerichtete Steuerungsapplikation 200 über eine zusätzliche sicherheitsgerichtete Kommunikationsverbindung 230 mit einer entsprechenden Umweltschutzeinrichtung 430 verbunden. In der sicherheitsgerichteten Steuerungsapplikation 200 sind weiterhin Umwelt-Sicherheitsfunktionen vorgesehen, welche mit entsprechenden Sensoren und Aktoren der Umweltschutzeinrichtung 430 zum Schutz der Umwelt vor Schäden durch Fehlfunktionen der Anlage 400 zusammenwirken. Solch eine Umweltschutzeinrichtung 430 kann beispielsweise Lüftungseinrichtungen, Sprinkleranlagen, Rauchmelder, Temperatursensoren, Gasdetektoren o. ä. umfassen.

Dabei ist die Anlage 400, die Personenschutzeinrichtung 420 und die Umweltschutzeinrichtung 430 im Zusammenwirken mit dem Steuerungssystem 100 gemäß dem Standard IEC 61508 zum Erreichen einer funktionalen Sicherheit ausgebildet und eingerichtet.

Nicht sicherheitsrelevante Funktionen der Anlage 400 werden weiterhin durch die im Bereich der Anlage 400 befindliche Standard-PLC 300 vermittels in der Standard-PLC 300 implementierten Anlagen-Betriebsfunktionen gesteuert.

Auf diese Weise ergibt sich ein effizientes Steuerungssystem 100 für die Anlage 400 sowie die Personen- und Umweltschutzeinrichtung 420, 430 bei welchem sicherheitsrelevante Steuerungsmechanismen in der Cloud 500 vorgesehen sind, während die Basis-Steuerungen der Anlage über die Standard-PLC 300 erfolgt.

Dabei kann in der sicherheitsgerichteten Steuerungsapplikation 200 beispielsweise ein sogenanntes Coded-Processing Verfahren implementiert sein. Alternativ kann die sicherheitsgerichtete Eigenschaft der sicherheitsgerichteten Steuerungsapplikation 200 auch über zwei unabhängig intern implementierte parallele Steuerungsabläufe realisiert sein.

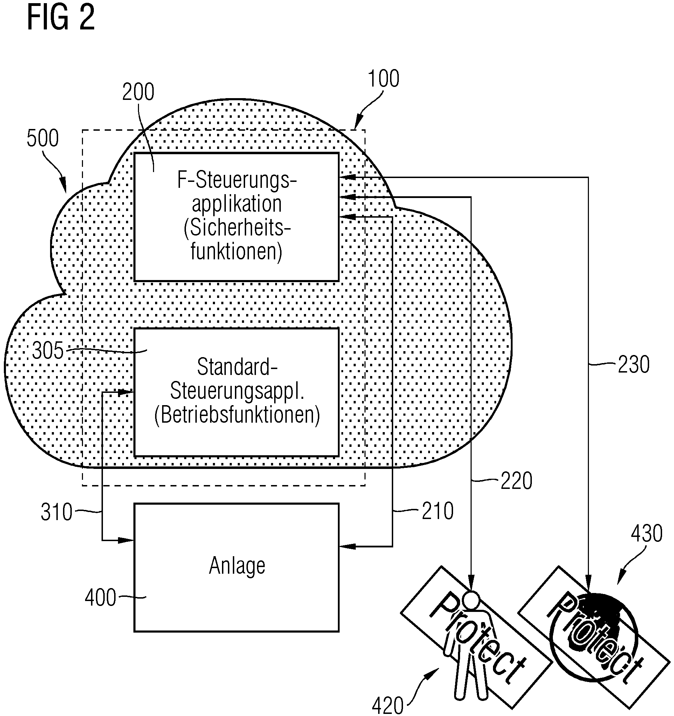

Figur 2 zeigt eine Abwandlung des in Figur 1 dargestellten Systems, indem anstatt der Standard-PLC 300, welche im Rahmen des in Figur eins dargestellten Systems als Hardware ausgebildet ist, eine Standard Steuerungsapplikation 305 vorgesehen ist, die nun ebenfalls in der Cloud 500 implementiert ist. Diese in Figur 2 dargestellte Standard-Steuerungsapplikation 305 steuert die nicht-sicherheitsrelevanten Funktionalitäten der Anlage 400 anstatt der in Figur 1 dargestellten Standard-PLC 300.

Die Bedeutung der weiteren in Figur 2 dargestellten Bezugszeichen entspricht der aus Figur 1.

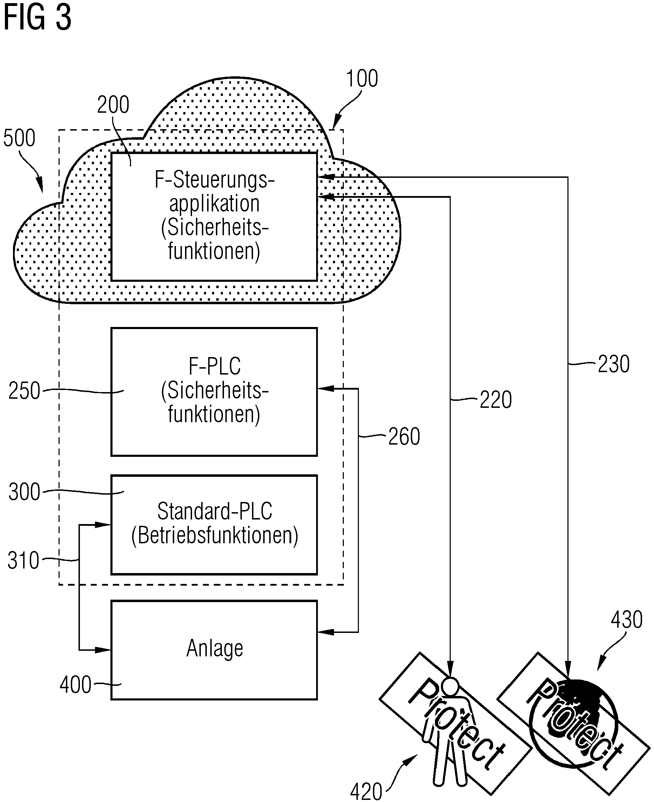

Figur 3 zeigt eine weitere Abwandlung des in Figur 1 dargestellten Systems, in dem zusätzlich eine zweite sicherheitsgerichtete Steuerung 250 vorgesehen ist, welche als lokaler Hardware-Controller bzw. lokale Hardware-PLC ausgebildet ist. Die sicherheitsgerichteten Funktionen bzw. Sicherheitsfunktionen der Anlage 400 werden über eine zweite sicherheitsgerichtete Kommunikationsverbindung 260 vom zweiten sicherheitsgerichteten Controller 250 gesteuert, während die Sicherheitsfunktionen der Personen- und Umweltschutzeinrichtung 420, 430 weiterhin von der sicherheitsgerichteten Steuerungsapplikation 200 aus der Cloud gesteuert werden.

Dabei befindet sich die zweite sicherheitsgerichtete PLC 250 ebenfalls im Bereich der Anlage 400.

Die weiteren in Figur 3 dargestellten Bezugszeichen entsprechen in ihrer Bedeutung denjenigen aus Figur 1.

Das in Figur 3 dargestellte Steuerungssystem 100 ist derart ausgebildet und eingerichtet, dass die Anlagen-Sicherheitsfunktionen zur sicherheitsgerichteten Steuerung der Anlage 400 in der lokalen, in Hardware implementierten lokalen zweiten sicherheitsgerichteten Steuerungseinrichtung 250 implementiert sind. Die Personen- und Umwelt-Sicherheitsfunktionen sind in der in der Cloud 500 implementierten sicherheitsgerichteten Steuerungsapplikation 200 vorgesehen.

Auf diese Weise ergibt sich eine effizientere sicherheitsgerichtete Steuerung der Anlage 400 sowie der Personen- und Umweltschutz-Sicherheitseinrichtung 420, 430, indem z.B. schnell wirkende Sicherheitsmechanismen für die Anlage 400 innerhalb der vor Ort befindlichen sicherheitsgerichteten PLC 250 implementiert sind und Sicherheitsfunktionen für Personen- und Umweltschutzmaßnahmen, die ggf. z.B. längere Responsezeiten haben dürfen, flexibel und lokal unabhängig in der Cloud 500 implementiert sind.

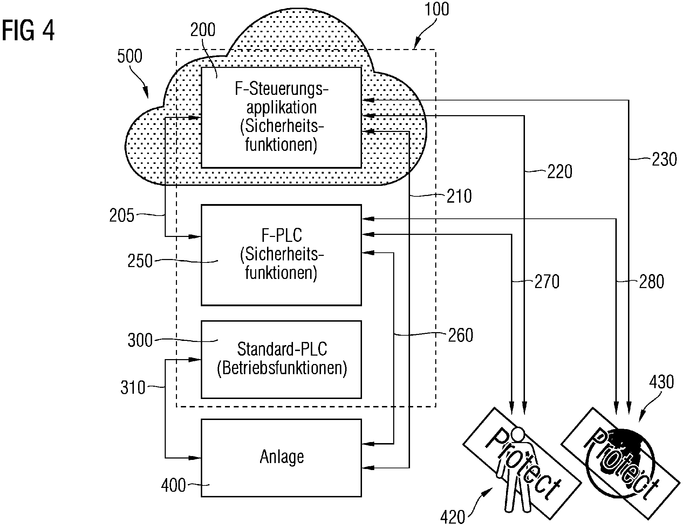

Figur 4 stellt eine weitere mögliche Ausgestaltung des in Figur 3 dargestellten Systems dar.

Dabei sind sowohl in der in der Cloud implementierten sicherheitsgerichteten Steuerungsapplikation 200 als auch in der sicherheitsgerichteten lokalen PLC 250 sämtliche Sicherheitsfunktionen zur Steuerung der Anlage 400 sowie der Personen- und Umweltschutzeinrichtung 420, 430 implementiert. Dazu sind von der sicherheitsgerichteten Steuerungsapplikation 200 in der Cloud 500 jeweils sicherheitsgerichtete Kommunikationsverbindungen 210, 220, 230 zur Anlage 400, der Personenschutzeinrichtung 420 sowie der Umweltschutzeinrichtung 430 vorgesehen. Entsprechend sind von der lokalen sicherheitsgerichteten PLC 250 entsprechende sicherheitsgerichtete Kommunikationsverbindungen 260, 270, 280 zur Anlage 400, der Personenschutzeinrichtung 420 sowie den Umweltschutzeinrichtung 430 vorgesehen.

In einem ersten Betriebsmodus des in Figur 4 dargestellten Steuerungssystems 100 sind die sicherheitsgerichtete Steuerungsapplikation 200 in der Cloud 400 und die in Hardware implementierte lokale sicherheitsgerichtete PLC 250 über eine weitere Kommunikationsverbindung 205 verbunden. Dabei sind die sicherheitsgerichtete Steuerungsapplikation 200 und die lokale sicherheitsgerichtete PLC 250 derart ausgebildet und eingerichtet, dass in beiden das Steuerungsprogramm, bzw. die Steuerungsprogramme, zur Steuerung der Anlage 400, der Personenschutzeinrichtung 420 sowie der Umweltschutzeinrichtung 430 in beiden Steuerungen 200, 250 parallel ablaufen. Dabei sind die Steuerungseinrichtungen 200, 250 zur zyklischen Abarbeitung der Steuerprogramme ausgebildet und eingerichtet, wobei nach jedem Zyklus die jeweils berechneten Ausgangssignale für die Anlage 400, die Personenschutzeinrichtung 420 sowie die Umweltschutzeinrichtung 430, verglichen werden, wobei die berechneten Ausgangssignale nur dann an die jeweiligen Anlagenteile 400, 420, 430 ausgegeben werden, wenn sie übereinstimmen.

Auf diese Weise kann eine für die sicherheitsgerichtete Eigenschaft des entsprechenden Steuerungssystems 100 notwendige Redundanz durch das Zusammenwirken der Steuerungsapplikation 200 mit der PLC 250 erreicht werden. Dabei können die Steuerungen 200, 250 derart ausgelegt und eingerichtet sein, dass festgelegt ist, welche der beiden Steuerungen dann den Ausgangswert an die Anlage 400, die Personenschutzeinrichtung 420 sowie die Umweltschutzeinrichtung 430 ausgibt, wenn die berechneten Werte beider Steuerungen 200, 250 übereinstimmen.

Weiterhin sind die Steuerungen 200, 250 derart ausgebildet und eingerichtet, dass in dem Fall, in dem die von beiden Steuerungen 200, 250 berechneten Werte nicht übereinstimmen, durch eine der beiden Steuerungen 200, 250, oder auch beide, die Anlage 400, die Personenschutzeinrichtung 420 sowie die Umweltschutzeinrichtung 430 in einen entsprechenden sicheren Zustand gebracht werden.

In diesem beschriebenen ersten Betriebsmodus würde eine entsprechende funktionale Sicherheit des Steuerungssystems 100 schon allein durch die beschriebene Redundanz der beiden Steuerungen 200, 250 erreicht, die beispielsweise als zusätzliche Sicherheit zu bereits in der Steuerungsapplikation 250 sowie der lokalen PLC 250 vorgesehenen Sicherheitsmaßnahmen, wie beispielsweise eine Ausführung des Steuerungsprogramms vermittels eines Coded-Processing-Mechanismus, vorgesehen sein kann.

In einem zweiten Betriebsmodus des in Figur 4 dargestellten Steuerungssystems 100 sind die sicherheitsgerichtete Steuerungsapplikation 200 sowie die sicherheitsgerichtete lokale PLC 250 ebenfalls über die Kommunikationsverbindung 205 gekoppelt. Allerdings sind die beiden sicherheitsgerichteten Steuerungseinrichtungen 200, 250 in diesem zweiten Betriebsmodus derart ausgebildet und eingerichtet, dass eine der beiden Steuerungen 200, 250 im Regelfall die Steuerung der Anlage 400, der Personenschutzeinrichtung 420 sowie der Umweltschutzeinrichtung 430 übernimmt, während in der anderen der Steuerungseinrichtungen 200, 250 das Steuerungsprogramm parallel zur ausgeführt wird, aber keine Ausgangssignale an Anlage 400, Personenschutzeinrichtung 420 sowie Umweltschutzeinrichtung 430 ausgegeben werden.

Tritt nun in der steuernden sicherheitsgerichteten Steuerungseinrichtung 200, 250 ein Fehler auf, der beispielsweise über einen implementierten Coded-Processing-Mechanismus nachgewiesen wurde, so übermittelt diese fehlerhafte Steuerungseinrichtung 200, 250 über die Kommunikationsverbindung 205 eine Information oder Nachricht zur Übernahme der Steuerungsfunktionalität an die andere der sicherheitsgerichteten Steuerungseinrichtungen 200, 250.

Danach übernimmt diese andere sicherheitsgerichtete Steuerungseinrichtung 200, 250 dann die Steuerung der Anlage 400, der Personenschutzeinrichtung 420 sowie der Umweltschutzeinrichtung 430, während die Steuerungsaktivität der ursprünglich steuernden sicherheitsgerichteten Steuerungseinrichtung 200, 250 deaktiviert wird.

Mit diesem zweiten Betriebsmodus kann beispielsweise insbesondere die Verfügbarkeit der sicherheitsgerichteten Steuerung für die Anlage 400, die Personenschutzeinrichtung 420 sowie die Umweltschutzeinrichtung 430 erhöht werden, was die insgesamte Ausfallwahrscheinlichkeit des Steuerungssystems 100 weiter verringert.

In Bezug auf die dargestellten Betriebsmodi des in Figur 4 dargestellten Steuerungssystems 100 kann der erste Betriebsmodus beispielsweise als ein die Sicherheit erhöhender Modus und der zweite Betriebsmodus als ein die Verfügbarkeit erhöhender Modus des in Figur 4 dargestellten Steuerungssystems 100 zusammengefasst werden.

## Patentansprüche

1. Steuerungssystem (100) zur Steuerung einer Vorrichtung oder Anlage (400, 420, 430),
wobei bezüglich der Steuerung der Vorrichtung oder Anlage (400, 420, 430) mindestens eine erste Sicherheitsfunktion vorgesehen ist, und
wobei das Steuerungssystem (100) eine erste sicherheitsgerichtete Steuerungseinrichtung (200) umfasst, welche zur Ausführung der mindestens einen ersten Sicherheitsfunktion ausgebildet und eingerichtet ist,
**dadurch gekennzeichnet,**
**dass** die erste sicherheitsgerichtete Steuerungseinrichtung (200) als eine erste sicherheitsgerichtete Steuerungsapplikation (200) ausgebildet und eingerichtet ist, die in einer Cloud (500) implementiert ist, und
**dass** die erste sicherheitsgerichtete Steuerungsapplikation (200) und die Vorrichtung oder Anlage (400, 420, 430) über eine erste sicherheitsgerichtete Kommunikationsverbindung (210, 220, 230) kommunikativ gekoppelt sind.

2. Steuerungssystem nach Anspruch 1,
**dadurch gekennzeichnet,**
**dass** das Steuerungssystem (100) eine zweite sicherheitsgerichtete Steuerungseinrichtung (250) umfasst, welche zur Ausführung der mindestens einen ersten Sicherheitsfunktion und/oder mindestens einer zweiten Sicherheitsfunktion ausgebildet und eingerichtet ist,
und **dass** die zweite sicherheitsgerichtete Steuerungseinrichtung (250) und die Vorrichtung oder Anlage (400, 420, 430) über eine zweite sicherheitsgerichtete Kommunikationsverbindung (260, 270, 280) kommunikativ gekoppelt sind.

3. Steuerungssystem nach Anspruch 2
**dadurch gekennzeichnet,**
**dass** die zweite sicherheitsgerichtete Steuerungseinrichtung (250) zur Ausführung der mindestens einen ersten und/oder zweiten Sicherheitsfunktion als eine in der Cloud implementierte zweite sicherheitsgerichtete Steuerungsapplikation (250) ausgebildet und eingerichtet ist,
oder,
**dass** die zweite sicherheitsgerichtete Steuerungseinrichtung (250) zur Ausführung der mindestens einen ersten und/oder zweiten Sicherheitsfunktion als eine baulich separate elektronische sicherheitsgerichtete Steuereinrichtung (250) ausgebildet und eingerichtet ist.

4. Steuerungssystem nach Anspruch 2 oder 3,
**dadurch gekennzeichnet,**
**dass** die zweite sicherheitsgerichtete Steuerungseinrichtung (250) zur Ausführung der mindestens einen ersten Sicherheitsfunktion ausgebildet und eingerichtet ist, und
**dass** die erste (200) und zweite sicherheitsgerichtete Steuerungseinrichtung (250) zur parallelen Ausführung der mindestens einen ersten Sicherheitsfunktion ausgebildet und eingerichtet sind.

5. Steuerungssystem nach Anspruch 4,
**dadurch gekennzeichnet,**
**dass** die erste (200) und zweite sicherheitsgerichtete Steuerungseinrichtung (250) derart ausgebildet und eingerichtet sind, dass nach einer parallelen Ausführung der mindestens einen ersten Sicherheitsfunktion durch die erste (200) und zweite sicherheitsgerichtete Steuerungseinrichtung (250) jeweils ein Ergebnis der jeweiligen Ausführung der mindestens einen ersten Sicherheitsfunktion vorliegt und dann eine Fehlermaßnahme ausgelöst wird, wenn sich die Ergebnisse unterscheiden,
insbesondere, dass als Fehlermaßnahme das Einnehmen eines sicheren Zustands durch die Vorrichtung oder Anlage (400, 420, 430) vorgesehen ist.

6. Steuerungssystem nach Anspruch 4,
**dadurch gekennzeichnet,**
**dass** bei einer fehlerhaften Ausführung der mindestens einen ersten Sicherheitsfunktion durch eine der beiden sicherheitsgerichteten Steuerungseinrichtungen (200, 250) das Ergebnis der Ausführung der mindestens einen ersten Sicherheitsfunktion durch die andere sicherheitsgerichtete Steuerungseinrichtung (200, 250) zur Steuerung der Vorrichtung oder Anlage (400, 420, 430) verwendet wird.

7. Steuerungssystem nach einem der vorstehenden Ansprüche, **dadurch gekennzeichnet,**
**dass** die Ausführung der mindestens einen ersten Sicherheitsfunktion durch die erste sicherheitsgerichtete Steuerungsapplikation (200),
und/oder die Ausführung der mindestens einen ersten und/oder zweiten Sicherheitsfunktion durch die zweite sicherheitsgerichtete Steuerungseinrichtung (250),
unter Verwendung eines "Coded Processing"-Verfahrens erfolgt, insbesondere, dass die Ausführung der mindestens einen ersten Sicherheitsfunktion durch die erste sicherheitsgerichtete Steuerungsapplikation (200),
und/oder die Ausführung der mindestens einen ersten und/oder zweiten Sicherheitsfunktion durch die zweite sicherheitsgerichtete Steuerungseinrichtung (250),
unter Verwendung eines "Diversified Encoding"-Verfahrens unter Verwendung von Coded Processing erfolgt.

8. Steuerungssystem nach einem der vorstehenden Ansprüche, **dadurch gekennzeichnet,**
**dass** zur Steuerung der Vorrichtung oder Anlage (400, 420, 430) weiterhin mindestens eine Betriebsfunktion vorgesehen ist,
wobei das Steuerungssystem weiterhin eine mit der Vorrichtung oder Anlage kommunikativ gekoppelte weitere Steuerungseinrichtung (300, 305) zur Ausführung der mindestens einen Betriebsfunktion umfasst.

9. Steuerungssystem nach Anspruch 8
**dadurch gekennzeichnet,**
**dass** die weitere Steuerungseinrichtung (300, 305) zur Ausführung der mindestens einen Betriebsfunktion als eine in der Cloud (400) implementierte zweite Steuerungsapplikation (305) ausgebildet und eingerichtet ist,
oder,
**dass** die weitere Steuerungseinrichtung (300, 305) zur Ausführung der mindestens einen Betriebsfunktion als eine baulich separate elektronische Steuereinrichtung (300) ausgebildet und eingerichtet ist.

10. Verfahren zum Betrieb eines Steuerungssystems (100) gemäß einem Ansprüche 1 bis 9,
**dadurch gekennzeichnet,**
**dass** eine Anlageninformation über die erste sicherheitsgerichtete Kommunikationsverbindung (210, 220, 230) von der Vorrichtung oder Anlage (400, 420, 430) zur ersten sicherheitsgerichteten Steuerungsapplikation (200) in die Cloud (500) übertragen wird,
dann die mindestens eine Sicherheitsfunktion unter Verwendung der Anlageninformation durch die erste sicherheitsgerichtete Steuerungsapplikation (200) ausgeführt wird, und
nachfolgend eine Steuerinformation für die Vorrichtung oder Anlage (400, 420, 430) von der ersten sicherheitsgerichteten Steuerungsapplikation (200) über die erste sicherheitsgerichtete Kommunikationsverbindung (210, 220, 230) an die Vorrichtung oder Anlage (400, 420, 430) übertragen wird.

11. Verfahren zum Betrieb eines Steuerungssystems gemäß einem Ansprüche 2 bis 9,
**dadurch gekennzeichnet,**
**dass** eine Anlageninformation sowohl über die erste sicherheitsgerichtete Kommunikationsverbindung (210, 220, 230) von der Vorrichtung oder Anlage (400, 420, 430) zur ersten sicherheitsgerichteten Steuerungsapplikation (200) in die Cloud (500) und
als auch über die zweite Sicherheitsgerichtete Kommunikationsverbindung (260, 270, 280) zur zweiten sicherheitsgerichteten Steuerungseinrichtung (250) übertragen wird,
dann die mindestens eine Sicherheitsfunktion unter Verwendung der Anlageninformation durch die erste sicherheitsgerichtete Steuerungsapplikation (200) ausgeführt wird, wobei ein erstes Ergebnis erzeugt wird, und weiterhin
die mindestens eine Sicherheitsfunktion unter Verwendung der Anlageninformation durch die zweite sicherheitsgerichtete Steuerungseinrichtung (250) ausgeführt wird, wobei ein zweites Ergebnis erzeugt wird,
nachfolgende ein Vergleich des ersten und zweiten Ergebnisses erfolgt, und
bei übereinstimmenden Ergebnissen eine Steuerinformation für die Vorrichtung oder Anlage von der ersten sicherheitsgerichteten Steuerungsapplikation (200) über die erste sicherheitsgerichtete Kommunikationsverbindung (210, 220, 230) an die Vorrichtung oder Anlage (400, 420, 430) übertragen wird, oder
bei übereinstimmenden Ergebnissen eine Steuerinformation für die Vorrichtung oder Anlage von der zweiten sicherheitsgerichteten Steuerungseinrichtung (250) über die zweite sicherheitsgerichtete Kommunikationsverbindung (260, 270, 280) an die Vorrichtung oder Anlage (400, 420, 430) übertragen wird.

12. Verfahren zum Betrieb eines Steuerungssystems gemäß einem Ansprüche 2 bis 9,
**dadurch gekennzeichnet,**
**dass** eine Anlageninformation sowohl über die erste sicherheitsgerichtete Kommunikationsverbindung (210, 220, 230) von der Vorrichtung oder Anlage (400, 420, 430) zur ersten sicherheitsgerichteten Steuerungsapplikation (200) und
über die zweite sicherheitsgerichtete Kommunikationsverbindung (260, 270, 280) zur zweiten sicherheitsgerichteten Steuerungseinrichtung (250) übertragen wird,
dann die mindestens eine Sicherheitsfunktion unter Verwendung der Anlageninformation durch die erste sicherheitsgerichtete Steuerungsapplikation (200) ausgeführt wird, und weiterhin die mindestens eine Sicherheitsfunktion unter Verwendung der Anlageninformation durch die zweite sicherheitsgerichtete Steuerungseinrichtung (250) ausgeführt wird,
wobei das Verfahren derart ausgebildet und eingerichtet ist, dass nach einem Erkennen einer fehlerhaften Ausführung der Sicherheitsfunktion in einer der beiden Steuerungseinrichtungen (200, 250) eine Ausgabe einer Steuerinformation für die Vorrichtung oder Anlage (400, 420, 430) von der anderen sicherheitsgerichteten Steuerungseinrichtung (200, 250) über die zugehörige sicherheitsgerichtete Kommunikationsverbindung (210, 220, 230, 260, 270, 280) erfolgt.

13. Verfahren nach einem der Ansprüche 10 bis 12,
**dadurch gekennzeichnet,**
**dass** die Ausführung der Sicherheitsfunktion durch die erste sicherheitsgerichtete Steuerungsapplikation (200) oder Steuerungseinrichtung (200),
und/oder die Ausführung der Sicherheitsfunktion durch die zweite sicherheitsgerichtete Steuerungseinrichtung (250), unter Verwendung eines "Coded Processing"-Verfahrens erfolgt, insbesondere, dass die Ausführung der mindestens einen ersten Sicherheitsfunktion durch die erste sicherheitsgerichtete Steuerungsapplikation (200) oder Steuereinrichtung (200), und/oder die Ausführung der mindestens einen ersten und/oder zweiten Sicherheitsfunktion durch die zweite sicherheitsgerichtete Steuerungseinrichtung (250),
unter Verwendung eines "Diversified Encoding"-Verfahrens unter Verwendung von "Coded Processing" erfolgt.

14. Sicherheitsgerichtete Steuerungsapplikation (200) für ein Steuerungssystem gemäß einem der Ansprüche 2 bis 9,
wobei im Rahmen einer Ausführung eines Verfahrens gemäß Anspruch 11 oder den Ansprüchen 11 und 13 die sicherheitsgerichtete Steuerungsapplikation (200) zum Vergleich des ersten und zweiten Ergebnisses ausgebildet und eingerichtet ist, sowie weiterhin bei übereinstimmenden Ergebnissen zur Ausgabe der Steuerinformation für die für die Vorrichtung oder Anlage ausgebildet und eingerichtet ist.
